# EUROPEAN PATENT APPLICATION

(11) **EP 4 848 701 A1**
(43) Date of publication of application: **02.12.2026**
(21) Application number: 25751560.1
(22) Date of filing: 06.02.2025
(51) Int. Cl.: H04L 69/16, H04W 76/15, H04W 8/14

(54) **COMMUNICATION METHOD AND APPARATUS**

(30) Priority: 08.02.2024 CN 202410178301
(71) Applicant: HUAWEI TECHNOLOGIES CO., LTD., Shenzhen, Guangdong 518129 (CN)
(72) Inventor: XU, Yishan, Shenzhen, Guangdong 518129 (CN); SPINI, Marco, Shenzhen, Guangdong 518129 (CN)
(74) Representative: Gill Jennings & Every LLP
(86) International application number: PCT/CN2025/075934
(87) International publication number: WO 2025/167961

(57) **Abstract**

This application relates to the field of wireless communication technologies, and provides a communication method and apparatus, to manage a session of a terminal device. A non-3GPP access network device receives first information sent by a core network device, where the first information indicates to establish a user plane resource of a first session of the terminal device; and sends user plane connection information to the terminal device, where the user plane connection information indicates a first mapping relationship, and the first mapping relationship includes at least one of the following: a mapping relationship between the first session and a first connection and/or a first stream, a mapping relationship between one or more QoS flows and the first connection and/or the first stream, and a mapping relationship between a QoS flow in the first session and the first connection and/or the first stream. The non-3GPP access network device may accurately map the first session or the QoS flow in the first session to the first connection and/or the first stream, thereby accurately transmitting service data of the terminal device.

## Description

### CROSS-REFERENCE TO RELATED APPLICATIONS

This application claims priority to Chinese Patent Application No. 202410178301.7, filed with the China National Intellectual Property Administration on February 8, 2024 and entitled "COMMUNICATION METHOD AND APPARATUS", which is incorporated herein by reference in its entirety.

### TECHNICAL FIELD

This application relates to the field of wireless communication technologies, and in particular, to a communication method and apparatus.

### BACKGROUND

A terminal device may access a network through a 3rd generation partnership project (3rd generation partnership project, 3GPP) access network device or a non-3GPP access network device.

In a wireless communication system, for example, in a new radio (new radio, NR) system, the terminal device may establish a protocol data unit (protocol data unit, PDU) session (session) with a data network (data network, DN) network element through a user plane function (user plane function, UPF) network element, and the PDU session provides a data transmission service between the terminal device and the DN network element. When the terminal device accesses a core network through the non-3GPP access network device, how to perform PDU session management is a problem that needs to be resolved.

### SUMMARY

This application provides a communication method and apparatus, to manage a session of a terminal device.

According to a first aspect, an embodiment of this application provides a communication method. The method may be performed by a non-3GPP access network device or a module (for example, a chip) used in a non-3GPP access network device. That the non-3GPP access network device performs the method is used as an example. The method includes: The non-3GPP access network device receives first information sent by a core network device, where the first information indicates to establish a user plane resource of a first session of a terminal device; and determines user plane connection information based on the first information, and sends the user plane connection information to the terminal device. The user plane connection information indicates a first mapping relationship, the first mapping relationship includes at least one of the following: a mapping relationship between the first session and a first connection and/or a first stream, a mapping relationship between one or more QoS flows and the first connection and/or the first stream, and a mapping relationship between a QoS flow in the first session and the first connection and/or the first stream, and the first connection is used to perform data transmission between the terminal device and the non-3GPP access network device according to a first protocol.

According to the foregoing method, when the terminal device requests to establish the first session, when creating a user plane connection or a user plane resource, the non-3GPP access network device may accurately map the first session or the QoS flow in the first session to the first connection and/or the first stream, between the terminal device and the non-3GPP access network device, that are/is based on the first protocol, thereby accurately transmitting service data of the terminal device.

In a possible design, the first mapping relationship includes the mapping relationship between the first session and the first stream; and the user plane connection information includes identification information of the first stream.

Optionally, the user plane connection information may further include a session identifier of the first session.

According to the foregoing design, the first session of the terminal device is mapped to the first stream, and different sessions may correspond to different streams, thereby implementing differentiated processing on the different sessions.

In a possible design, the first mapping relationship includes the mapping relationship between the QoS flow in the first session and the first stream; and the user plane connection information includes identification information of the QoS flow in the first session and identification information of the first stream.

According to the foregoing design, the QoS flow in the first session of the terminal device is mapped to the first stream, and different QoS flows in the first session may correspond to different streams, thereby implementing differentiated processing on the different QoS flows in the session.

In a possible design, the first connection is used to transmit the first session and control signaling of the terminal device.

According to the foregoing design, a service stream corresponding to a session of the terminal device and control signaling may be transmitted between the non-3GPP access network device and the terminal device via one connection.

In a possible design, the first mapping relationship includes the mapping relationship between the first session and the first connection and the first stream; and the user plane connection information includes identification information of the first stream, or the user plane connection information includes information indicating the first connection and identification information of the first stream.

According to the foregoing design, the first session of the terminal device is mapped to the first connection and the first stream, and different sessions may correspond to different connections and/or streams, thereby implementing differentiated processing on the different sessions.

In a possible design, the first connection is used to transmit one or more sessions of the terminal device, the one or more sessions include the first session, and the first session corresponds to the first stream.

According to the foregoing design, service streams corresponding to the one or more sessions of the terminal device may be transmitted between the non-3GPP access network device and the terminal device via one connection, and different sessions may be mapped to different streams, thereby implementing differentiated processing on the sessions.

In a possible design, the first mapping relationship includes the mapping relationship between the QoS flow in the first session and the first connection and the first stream; and the user plane connection information includes identification information of the QoS flow in the first session and identification information of the first stream, or the user plane connection information includes information indicating the first connection, identification information of the QoS flow in the first session, and identification information of the first stream.

According to the foregoing design, the QoS flow in the first session of the terminal device is mapped to the first connection and the first stream, and different QoS flows in the session may correspond to different connections and/or streams, thereby implementing differentiated processing on the different QoS flows in the session.

In a possible design, the first connection is used to transmit one or more sessions of the terminal device, the one or more sessions include the first session, and the first stream is used to transmit one or more QoS flows in the first session; or the first connection is used to transmit the first session, and the first stream is used to transmit one or more QoS flows in the first session; or the first connection is used to transmit same QoS flows in one or more sessions of the terminal device, and the first stream is used to transmit the first session.

According to the foregoing design, a connection between the non-3GPP access network device and the terminal device may correspond to different granularities (for example, a session granularity or a QoS flow), to implement flexible mapping between a session, a QoS flow, a connection, and a stream.

In a possible design, the first mapping relationship includes the mapping relationship between the first session and the first connection; and the user plane connection information includes information indicating the first connection.

In a possible design, the first connection is used to transmit the first session.

According to the foregoing design, the first session of the terminal device is mapped to the first connection, and different sessions may correspond to different connections, thereby implementing differentiated processing on the different sessions.

In a possible design, the first mapping relationship includes the mapping relationship between the QoS flow in the first session and the first connection; and the user plane connection information includes information indicating the first connection and identification information of the QoS flow in the first session.

In a possible design, the first connection is used to transmit one or more QoS flows in the first session.

According to the foregoing design, the QoS flow in the first session of the terminal device is mapped to the first connection, and different QoS flows in the session may correspond to different connections, thereby implementing differentiated processing on the different QoS flows in the session.

In a possible design, the first mapping relationship includes the mapping relationship between the one or more QoS flows and the first connection; and the user plane connection information includes identification information of a QoS flow, or the user plane connection information includes identification information of a QoS flow and information indicating the first connection.

In a possible design, the first connection is used to transmit same QoS flows in one or more sessions of the terminal device, and the one or more sessions include the first session.

According to the foregoing design, the first connection may be at a QoS flow granularity, and same QoS flows in different sessions may be mapped to a same connection, to implement differentiated processing on different QoS flows.

In a possible design, if the non-3GPP access network device determines that the first session or the first connection corresponding to the QoS flow in the first session is not established between the terminal device and the non-3GPP access network device, the non-3GPP access network device establishes the first session or the first connection corresponding to the QoS flow in the first session.

According to the foregoing design, when the first session of the terminal device or the QoS flow in the first session is mapped to the first connection, and the first connection has not been established, the non-3GPP access network device establishes the first connection, thereby ensuring accurate transmission of uplink and downlink data/signaling of the terminal device.

In a possible design, the non-3GPP access network device receives uplink data from the terminal device; determines, based on a first connection and/or a first stream corresponding to the uplink data and the first mapping relationship, a session and/or a QoS flow corresponding to the uplink data; and sends the uplink data based on the session and/or the QoS flow corresponding to the uplink data.

According to the foregoing design, after receiving the uplink data of the terminal device, the non-3GPP access network device may accurately transmit the uplink data of the terminal device according to the first mapping relationship.

In a possible design, the non-3GPP access network device receives downlink data of the terminal device; determines, based on a session and/or a QoS flow corresponding to the downlink data and the first mapping relationship, a first connection and/or a first stream corresponding to the downlink data; and sends the downlink data to the terminal device based on the first connection and/or the first stream corresponding to the downlink data.

According to the foregoing design, after receiving the downlink data of the terminal device, the non-3GPP access network device may accurately transmit the downlink data of the terminal device according to the first mapping relationship.

In a possible design, if the non-3GPP access network device determines that the terminal device communicates with the non-3GPP access network device according to the first protocol, the non-3GPP access network device sends connection establishment information to the terminal device, where the connection establishment information is used to establish a second connection between the terminal device and the non-3GPP access network device, and the second connection is used to transmit control signaling between the terminal device and the non-3GPP access network device according to the first protocol.

Optionally, the second connection may be the same as the first connection.

According to the foregoing design, the second connection may be established between the non-3GPP access network device and the terminal device, thereby ensuring accurate transmission of signaling between the non-3GPP access network device and the terminal device.

In a possible design, the non-3GPP access network device receives first capability information sent by the terminal device, where the first capability information indicates that the terminal device supports the first protocol; and sends second capability information to the terminal device, where the second capability information indicates that the non-3GPP access network device supports the first protocol.

According to the foregoing design, capability negotiation may be performed between the non-3GPP access network device and the terminal device. After it is determined that the two devices both support the first protocol, a connection based on the first protocol is established.

According to a second aspect, an embodiment of this application provides a communication method. The method may be performed by a terminal device or a module (for example, a chip) used in a terminal device. That the terminal device performs the method is used as an example. The method includes: The terminal device sends second information, where the second information requests to establish a first session; and receives user plane connection information sent by the non-3GPP access network device. The user plane connection information indicates a first mapping relationship, the first mapping relationship includes at least one of the following: a mapping relationship between the first session and a first connection and/or a first stream, a mapping relationship between one or more QoS flows and the first connection and/or the first stream, and a mapping relationship between a QoS flow in the first session and the first connection and/or the first stream, and the first connection is used to perform data transmission between the terminal device and the non-3GPP access network device according to a first protocol.

In a possible design, the first mapping relationship includes the mapping relationship between the first session and the first stream; and the user plane connection information includes identification information of the first stream.

In a possible design, the first mapping relationship includes the mapping relationship between the QoS flow in the first session and the first stream; and the user plane connection information includes identification information of the QoS flow in the first session and identification information of the first stream.

In a possible design, the first connection is used to transmit the first session and control signaling of the terminal device.

In a possible design, the first mapping relationship includes the mapping relationship between the first session and the first connection and the first stream; and the user plane connection information includes identification information of the first stream, or the user plane connection information includes information indicating the first connection and identification information of the first stream.

In a possible design, the first connection is used to transmit one or more sessions of the terminal device, the one or more sessions include the first session, and the first session corresponds to the first stream.

In a possible design, the first mapping relationship includes the mapping relationship between the QoS flow in the first session and the first connection and the first stream; and the user plane connection information includes identification information of the QoS flow in the first session and identification information of the first stream, or the user plane connection information includes information indicating the first connection, identification information of the QoS flow in the first session, and identification information of the first stream.

In a possible design, the first connection is used to transmit one or more sessions of the terminal device, the one or more sessions include the first session, and the first stream is used to transmit one or more QoS flows in the first session; or the first connection is used to transmit the first session, and the first stream is used to transmit one or more QoS flows in the first session; or the first connection is used to transmit same QoS flows in one or more sessions of the terminal device, and the first stream is used to transmit the first session.

In a possible design, the first mapping relationship includes the mapping relationship between the first session and the first connection; and the user plane connection information includes information indicating the first connection.

In a possible design, the first connection is used to transmit the first session.

In a possible design, the first mapping relationship includes the mapping relationship between the QoS flow in the first session and the first connection; and the user plane connection information includes information indicating the first connection and identification information of the QoS flow in the first session.

In a possible design, the first connection is used to transmit one or more QoS flows in the first session.

In a possible design, the first mapping relationship includes the mapping relationship between the one or more QoS flows and the first connection; and the user plane connection information includes identification information of a QoS flow, or the user plane connection information includes identification information of a QoS flow and information indicating the first connection.

In a possible design, the first connection is used to transmit same QoS flows in one or more sessions of the terminal device, and the one or more sessions include the first session.

In a possible design, the terminal device obtains to-be-sent uplink data; the non-3GPP access network device determines, based on a session and/or a QoS flow corresponding to the uplink data and the first mapping relationship, a first connection and/or a first stream corresponding to the uplink data; and the non-3GPP access network device sends the uplink data to the non-3GPP access network device based on the first connection and/or the first stream corresponding to the uplink data.

In a possible design, the terminal device receives connection establishment information sent by the non-3GPP access network device, where the connection establishment information is used to establish a second connection between the terminal device and the non-3GPP access network device, and the second connection is used to transmit control signaling between the terminal device and the non-3GPP access network device according to the first protocol.

In a possible design, the terminal device sends first capability information to the non-3GPP access network device, where the first capability information indicates that the terminal device supports the first protocol; and receives second capability information sent by the non-3GPP access network device, where the second capability information indicates that the non-3GPP access network device supports the first protocol.

In a possible design, the terminal device sends third information to a domain name server, where the third information indicates to query the non-3GPP access network device that supports the first protocol; and receives information, sent by the domain name server, about the non-3GPP access network device that supports the first protocol.

According to a third aspect, an embodiment of this application provides a communication method. The method may be performed by a non-3GPP access network device or a module (for example, a chip) used in a non-3GPP access network device. That the non-3GPP access network device performs the method is used as an example. The method includes: The non-3GPP access network device receives first information sent by a core network device, where the first information indicates to establish a user plane resource of a first session of a terminal device; and determines user plane connection information based on the first information, and sends the user plane connection information to the terminal device. The user plane connection information indicates a first mapping relationship, the first mapping relationship includes at least one of the following: a mapping relationship between the first session and a first connection and/or a first stream, a mapping relationship between one or more QoS flows and the first connection and/or the first stream, and a mapping relationship between a QoS flow in the first session and the first connection and/or the first stream, and the first connection is used to perform data transmission between the terminal device and the non-3GPP access network device according to a first protocol.

According to the foregoing method, when the terminal device requests to establish the first session, when creating a user plane connection, the non-3GPP access network device may accurately map the first session or the QoS flow in the first session to the first connection and/or the first stream, between the terminal device and the non-3GPP access network device, that are/is based on the first protocol, to accurately manage the session established by the terminal device.

In a possible design, the first connection is used to transmit the first session and control signaling of the terminal device.

In a possible design, the first mapping relationship includes the mapping relationship between the first session and the first stream; and the user plane connection information includes identification information of the first stream.

Optionally, the user plane connection information may further include a session identifier of the first session.

In a possible design, the first mapping relationship includes the mapping relationship between the QoS flow in the first session and the first stream; and the user plane connection information includes identification information of the QoS flow in the first session and identification information of the first stream.

Optionally, the user plane connection information may further include a session identifier of the first session.

According to the foregoing design, a service stream corresponding to a session of the terminal device and control signaling may be transmitted between the non-3GPP access network device and the terminal device via one connection, and differentiated processing is implemented on sessions or different QoS flows in sessions.

In a possible design, the first connection is used to transmit one or more sessions of the terminal device, the one or more sessions include the first session, and the first session corresponds to the first stream.

In a possible design, the first mapping relationship includes the mapping relationship between the first session and the first connection and the first stream; and the user plane connection information includes identification information of the first stream, or the user plane connection information includes information indicating the first connection and identification information of the first stream.

Optionally, the user plane connection information may further include a session identifier of the first session.

In a possible design, the first connection is used to transmit one or more sessions of the terminal device, the one or more sessions include the first session, and the first stream is used to transmit one or more QoS flows in the first session.

In a possible design, the first mapping relationship includes the mapping relationship between the QoS flow in the first session and the first connection and the first stream; and
the user plane connection information includes identification information of the QoS flow in the first session and identification information of the first stream, or the user plane connection information includes information indicating the first connection, identification information of the QoS flow in the first session, and identification information of the first stream.

Optionally, the user plane connection information may further include a session identifier of the first session.

According to the foregoing design, a service stream corresponding to one or more sessions of the terminal device may be transmitted between the non-3GPP access network device and the terminal device via one connection, and differentiated processing is implemented on sessions or different QoS flows in sessions.

In a possible design, the first connection is used to transmit the first session.

In a possible design, the first stream is used to transmit one or more QoS flows in the first session.

In a possible design, the first mapping relationship includes the mapping relationship between the first session and the first connection, and the user plane connection information includes information indicating the first connection.

Optionally, the user plane connection information may further include a session identifier of the first session.

In a possible design, the first mapping relationship includes the mapping relationship between the QoS flow in the first session and the first connection and the first stream; and the user plane connection information includes information indicating the first connection, identification information of the QoS flow in the first session, and identification information of the first stream.

Optionally, the user plane connection information may further include a session identifier of the first session.

According to the foregoing design, a service stream corresponding to one or more sessions of the terminal device may be transmitted between the non-3GPP access network device and the terminal device via one or more connections, and differentiated processing is implemented on sessions or different QoS flows in sessions.

In a possible design, the first connection is used to transmit one or more QoS flows in the first session, and the one or more sessions include the first session.

In a possible design, the first mapping relationship includes the mapping relationship between the QoS flow in the first session and the first connection; and the user plane connection information includes information indicating the first connection and identification information of the QoS flow in the first session.

Optionally, the user plane connection information may further include a session identifier of the first session.

According to the foregoing design, a service stream corresponding to one or more sessions of the terminal device may be transmitted between the non-3GPP access network device and the terminal device via one or more connections, and differentiated processing is implemented on sessions or different QoS flows in sessions.

In a possible design, the first connection is used to transmit same QoS flows in one or more sessions of the terminal device, and the one or more sessions include the first session.

In a possible design, the first mapping relationship includes the mapping relationship between the one or more QoS flows in the terminal device and the first connection; and the user plane connection information includes identification information of a QoS flow, or the user plane connection information includes identification information of a QoS flow and information indicating the first connection.

In a possible design, the first connection is used to transmit same QoS flows in one or more sessions of the terminal device, the one or more sessions include the first session, and the first stream is used to transmit the first session.

In a possible design, the first mapping relationship includes the mapping relationship between the QoS flow in the first session and the first connection and the first data stream; and the user plane connection information includes identification information of the QoS flow in the first session and identification information of the first stream, or the user plane connection information includes identification information of the QoS flow in the first session, information indicating the first connection, and identification information of the first stream.

Optionally, the user plane connection information may further include a session identifier of the first session.

According to the foregoing design, a service stream corresponding to one or more sessions of the terminal device may be transmitted between the non-3GPP access network device and the terminal device via one or more connections, and differentiated processing is implemented on sessions or different QoS flows in sessions.

In a possible design, if the non-3GPP access network device determines that the first session or the first connection corresponding to the QoS flow in the first session is not established between the terminal device and the non-3GPP access network device, the non-3GPP access network device establishes the first session or the first connection corresponding to the QoS flow in the first session.

According to the foregoing design, when the first session of the terminal device or the QoS flow in the first session is mapped to the first connection, and the first connection has not been established, the non-3GPP access network device establishes the first connection, thereby ensuring accurate transmission of uplink and downlink data/signaling of the terminal device.

In a possible design, the non-3GPP access network device receives uplink data from the terminal device; determines, based on a first connection and/or a first stream corresponding to the uplink data and the first mapping relationship, a session and/or a QoS flow corresponding to the uplink data; and sends the uplink data based on the session and/or the QoS flow corresponding to the uplink data.

According to the foregoing design, after receiving the uplink data of the terminal device, the non-3GPP access network device may accurately transmit the uplink data of the terminal device according to the first mapping relationship.

In a possible design, the non-3GPP access network device receives downlink data of the terminal device; determines, based on a session and/or a QoS flow corresponding to the downlink data and the first mapping relationship, a first connection and/or a first stream corresponding to the downlink data; and sends the downlink data to the terminal device based on the first connection and/or the first stream corresponding to the downlink data.

According to the foregoing design, after receiving the downlink data of the terminal device, the non-3GPP access network device may accurately transmit the downlink data of the terminal device according to the first mapping relationship.

In a possible design, if the non-3GPP access network device determines that the terminal device communicates with the non-3GPP access network device according to the first protocol, the non-3GPP access network device sends connection establishment information to the terminal device, where the connection establishment information is used to establish a second connection between the terminal device and the non-3GPP access network device, and the second connection is used to transmit control signaling between the terminal device and the non-3GPP access network device according to the first protocol.

Optionally, the second connection may be the same as the first connection.

According to the foregoing design, the second connection may be established between the non-3GPP access network device and the terminal device, thereby ensuring accurate transmission of signaling between the non-3GPP access network device and the terminal device.

In a possible design, the non-3GPP access network device receives first capability information sent by the terminal device, where the first capability information indicates that the terminal device supports the first protocol; and sends second capability information to the terminal device, where the second capability information indicates that the non-3GPP access network device supports the first protocol.

According to the foregoing design, capability negotiation may be performed between the non-3GPP access network device and the terminal device. After it is determined that the two devices both support the first protocol, a connection based on the first protocol is established.

According to a fourth aspect, an embodiment of this application provides a communication method. The method may be performed by a terminal device or a module (for example, a chip) used in a terminal device. That the terminal device performs the method is used as an example. The method includes: The terminal device sends second information, where the second information requests to establish a first session; and receives user plane connection information sent by the non-3GPP access network device. The user plane connection information indicates a first mapping relationship, the first mapping relationship includes at least one of the following: a mapping relationship between the first session and a first connection and/or a first stream, a mapping relationship between one or more QoS flows and the first connection and/or the first stream, and a mapping relationship between a QoS flow in the first session and the first connection and/or the first stream, and the first connection is used to perform data transmission between the terminal device and the non-3GPP access network device according to a first protocol.

In a possible design, the first connection is used to transmit the first session and control signaling of the terminal device.

In a possible design, the first mapping relationship includes the mapping relationship between the first session and the first stream; and the user plane connection information includes identification information of the first stream.

Optionally, the user plane connection information may further include a session identifier of the first session.

In a possible design, the first mapping relationship includes the mapping relationship between the QoS flow in the first session and the first stream; and the user plane connection information includes identification information of the QoS flow in the first session and identification information of the first stream.

Optionally, the user plane connection information may further include a session identifier of the first session.

In a possible design, the first connection is used to transmit one or more sessions of the terminal device, the one or more sessions include the first session, and the first session corresponds to the first stream.

In a possible design, the first mapping relationship includes the mapping relationship between the first session and the first connection and the first stream; and the user plane connection information includes identification information of the first stream, or the user plane connection information includes information indicating the first connection and identification information of the first stream.

Optionally, the user plane connection information may further include a session identifier of the first session.

In a possible design, the first connection is used to transmit one or more sessions of the terminal device, the one or more sessions include the first session, and the first stream is used to transmit one or more QoS flows in the first session.

In a possible design, the first mapping relationship includes the mapping relationship between the QoS flow in the first session and the first connection and the first stream; and
the user plane connection information includes identification information of the QoS flow in the first session and identification information of the first stream, or the user plane connection information includes information indicating the first connection, identification information of the QoS flow in the first session, and identification information of the first stream.

Optionally, the user plane connection information may further include a session identifier of the first session.

In a possible design, the first connection is used to transmit the first session.

In a possible design, the first stream is used to transmit one or more QoS flows in the first session.

In a possible design, the first mapping relationship includes the mapping relationship between the first session and the first connection; and the user plane connection information includes information indicating the first connection.

Optionally, the user plane connection information may further include a session identifier of the first session.

In a possible design, the first mapping relationship includes the mapping relationship between the QoS flow in the first session and the first connection and the first stream; and the user plane connection information includes information indicating the first connection, identification information of the QoS flow in the first session, and identification information of the first stream.

Optionally, the user plane connection information may further include a session identifier of the first session.

In a possible design, the first connection is used to transmit one or more QoS flows in the first session, and the one or more sessions include the first session.

In a possible design, the first mapping relationship includes the mapping relationship between the QoS flow in the first session and the first connection; and the user plane connection information includes information indicating the first connection and identification information of the QoS flow in the first session.

Optionally, the user plane connection information may further include a session identifier of the first session.

In a possible design, the first connection is used to transmit same QoS flows in one or more sessions of the terminal device, and the one or more sessions include the first session.

In a possible design, the first mapping relationship includes the mapping relationship between one or more QoS flows in the terminal device and the first connection; and the user plane connection information includes identification information of a QoS flow, or the user plane connection information includes identification information of a QoS flow and information indicating the first connection.

In a possible design, the first connection is used to transmit same QoS flows in one or more sessions of the terminal device, the one or more sessions include the first session, and the first stream is used to transmit the first session.

In a possible design, the first mapping relationship includes the mapping relationship between the QoS flow in the first session and the first connection and the first data stream; and the user plane connection information includes identification information of the QoS flow in the first session and identification information of the first stream, or the user plane connection information includes identification information of the QoS flow in the first session, information indicating the first connection, and identification information of the first stream.

Optionally, the user plane connection information may further include a session identifier of the first session.

According to a fifth aspect, a communication apparatus is provided. The communication apparatus may be the non-3GPP access network device or the terminal device. The communication apparatus may include a communication module and a processing module, to perform any one of the first aspect to the fourth aspect, or perform any one of the possible implementations of the first aspect to the fourth aspect. The communication module is configured to perform receiving and sending operations, for example, functions related to sending and receiving. The communication module may be referred to as a transceiver unit. Optionally, the communication module includes a receiving module and a sending module. The processing module is configured to perform a processing operation.

In a design, the communication apparatus is a communication chip, the processing module may be one or more processors or processor cores, and the communication module may be an input/output circuit, an input/output interface, or an antenna port of the communication chip.

In another design, the communication module may be a transmitter and a receiver, or the communication module may be a transmitter machine and a receiver machine.

Optionally, the communication apparatus further includes modules that may be configured to perform any one of the first aspect to the fourth aspect, or perform any one of the possible implementations of the first aspect to the fourth aspect.

According to a sixth aspect, a communication apparatus is provided. The communication apparatus may be the non-3GPP access network device or the terminal device. The communication apparatus may include a processor and a memory, to perform any one of the first aspect to the fourth aspect, or perform any one of the possible implementations of the first aspect to the fourth aspect. Optionally, the communication apparatus further includes a transceiver. The memory is configured to store a computer program or instructions. The processor is configured to invoke the computer program or the instructions from the memory and run the computer program or the instructions. When the processor executes the computer program or the instructions in the memory, the communication apparatus is enabled to perform any one of the first aspect to the fourth aspect, or perform any one of the possible implementations of the first aspect to the fourth aspect.

Optionally, there are one or more processors, and there are one or more memories.

Optionally, the memory may be integrated with the processor, or the memory and the processor are disposed separately.

Optionally, the transceiver may include a transmitter machine (transmitter) and a receiver machine (receiver).

According to a seventh aspect, a communication apparatus is provided. The communication apparatus may be the non-3GPP access network device or the terminal device. The communication apparatus may include a processor, to perform any one of the first aspect to the fourth aspect, or perform any one of the possible implementations of the first aspect to the fourth aspect. The processor is coupled to a memory. Optionally, the communication apparatus further includes the memory. Optionally, the communication apparatus further includes a communication interface, and the processor is coupled to the communication interface.

In an implementation, when the communication apparatus is a non-3GPP access network device or a terminal device, the communication interface may be a transceiver or an input/output interface. Optionally, the transceiver may be a transceiver circuit. Optionally, the input/output interface may be an input/output circuit.

In another implementation, when the communication apparatus is a chip or a chip system, the communication interface may be an input/output interface, an interface circuit, an output circuit, an input circuit, a pin, a related circuit, or the like on the chip or the chip system. The processor may alternatively be embodied as a processing circuit or a logic circuit.

According to an eighth aspect, a computer-readable storage medium is provided. The computer-readable storage medium stores a computer program or instructions. When the computer program or the instructions are executed by a processor, any one of the first aspect to the fourth aspect, or any one of the possible implementations of the first aspect to the fourth aspect is implemented.

According to a ninth aspect, a computer program product storing instructions is provided. When the instructions are run by a processor, any one of the first aspect to the fourth aspect, or any one of the possible implementations of the first aspect to the fourth aspect is implemented.

According to a tenth aspect, a communication apparatus is provided. The communication apparatus includes a processor, and may further include a storage medium. The storage medium stores instructions. When the instructions are executed by the processor, any one of the first aspect to the fourth aspect, or any one of the possible implementations of the first aspect to the fourth aspect is implemented. The communication apparatus may be a chip system. The chip system may include a chip, or may include a chip and another discrete component.

According to an eleventh aspect, a communication system is further provided. The communication system includes the non-3GPP access network device according to the first aspect or the third aspect and the terminal device according to the second aspect or the fourth aspect.

According to a twelfth aspect, this application further provides a chip, including a processor. The processor is coupled to a memory and is configured to: read and execute program instructions stored in the memory, so that the chip implements any one of the first aspect to the fourth aspect, or any one of the possible implementations of the first aspect to the fourth aspect.

For the foregoing aspects from the third aspect to the twelfth aspect and technical effect that can be achieved in the foregoing aspects, refer to the descriptions of the technical effect that can be achieved in the first aspect or the second aspect or in various possible solutions in the aspects. Details are not described herein again.

### BRIEF DESCRIPTION OF DRAWINGS

FIG. 1 is a diagram of a structure of a protocol stack according to an embodiment of this application;
FIG. 2 is a diagram of a format of a QUIC data packet according to an embodiment of this application;
FIG. 3 is a diagram of an untrusted non-3GPP access system according to an embodiment of this application;
FIG. 4 is a diagram of a trusted non-3GPP access system according to an embodiment of this application;
FIG. 5 is a flowchart of an access network device selection method according to an embodiment of this application;
FIG. 6 is a flowchart of a registration and connection method according to an embodiment of this application;
FIG. 7 is a flowchart of an access network device selection method according to an embodiment of this application;
FIG. 8 is a flowchart of an access network device selection method according to an embodiment of this application;
FIG. 9 is a flowchart of a registration and connection method according to an embodiment of this application;
FIG. 10 is a flowchart of a session management method according to an embodiment of this application;
FIG. 11 is a flowchart of a communication method according to an embodiment of this application;
FIG. 12 is a diagram of a structure of a communication apparatus according to an embodiment of this application; and
FIG. 13 is a diagram of a structure of a communication apparatus according to an embodiment of this application.

### DESCRIPTION OF EMBODIMENTS

For ease of understanding of the technical solutions provided in embodiments of this application, the following describes technical terms used in this application.

### 1. QUIC protocol:

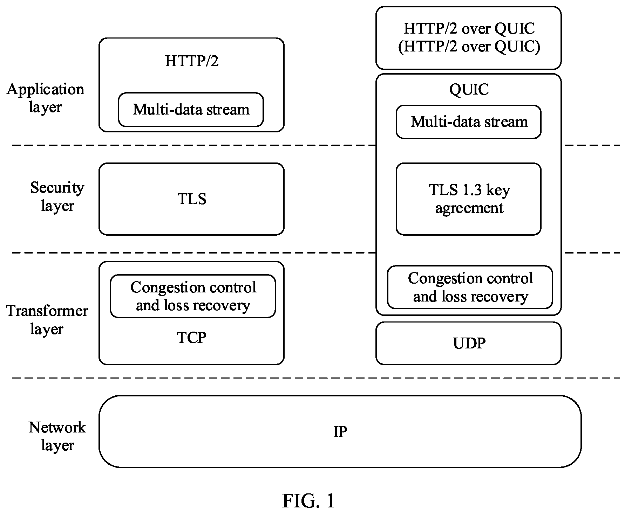

The QUIC protocol is a low-latency Internet transport layer protocol based on UDP, and is a transport protocol equivalent to the transmission control protocol (transmission control protocol, TCP). In a protocol stack structure shown in FIG. 1, because the QUIC protocol is established based on the UDP protocol, compared with other protocols such as SPDY and HTTP2 based on the TCP protocol, the QUIC protocol has more space for customization and optimization. At an upper layer of the UDP protocol, the QUIC protocol provides reliable, ordered, secure, and faster transmission services. Currently, a large quantity of service request responses are carried by the QUIC. It can be said that the QUIC protocol has become a next-generation transport layer protocol.

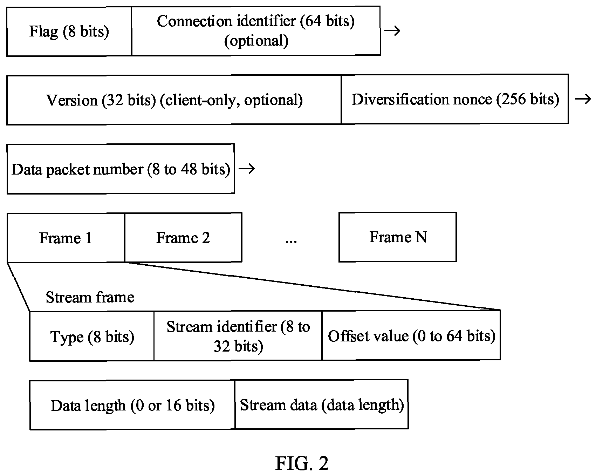

A format of a QUIC data packet may be shown in FIG. 2. The QUIC data packet may include two parts: a packet header and packet content. The packet header may include a flag (flags), a connection identifier (connection ID, CID) (the connection identifier is optional), a QUIC version (version) (for example, a packet sent by a client may carry this field), a diversification nonce (diversification nonce), and a data packet number (packet number). The packet content may be an encrypted ciphertext, and may encapsulate frame (frame) data of a plurality of streams (stream). The frame may include a type (type), a stream identifier (stream ID), an offset (offset) value, a data length (data length), and stream data (stream data).

### 2. QUIC connection and connection identifier:

One or more QUIC connections (connection) may be established between a terminal device and an access network device. Different QUIC connections may be distinguished by using QUIC connection identifiers (for example, connection IDs). In each QUIC connection, one or more data packets may be transmitted, and packet numbers identify a sequence of the data packets. Each data packet may include one or more different frames. A relatively common frame is a stream frame (stream frame), and the stream frame is reliable transmission and is identified by using a stream ID. In addition, there is a datagram frame, which is unreliable transmission.

### 3. PDU session:

One of key tasks of 5GS session management is to provide a terminal device with a data connection to a DN. To establish the connection from the terminal device to the DN, a PDU session needs to be established. The PDU session is a logical connection between the terminal device and a specific DN, and provides the terminal device with a user plane connection to the DN. A "PDU" is a basic user protocol type carried in the PDU session, and may be an IP data packet or an Ethernet frame depending on a PDU session type. Currently, a 5GS supports three PDU session types: an IP-based PDU session type, an Ethernet PDU session type, and an unstructured PDU session type. A "PDU" carried in an IP-based PDU session is an IP data packet, and a "PDU" carried in an Ethernet PDU session is an Ethernet frame. The 5GS does not interpret a "PDU" carried in an unstructured PDU session.

In a PDU session establishment process, a corresponding user plane connection between the terminal device and the DN is activated. The user plane connection provides PDU transmission between the terminal device and the DN, and carries actual data such as a voice and a video. One terminal device may request to simultaneously establish a plurality of PDU sessions, and the plurality of PDU sessions may be connected to different DNs. For example, when UE needs an Internet connection and an IMS service simultaneously, a PDU session from the terminal device to the Internet and a PDU session from the terminal device to an IMS may be simultaneously established. In addition, one terminal device may simultaneously request a single DN to establish a plurality of PDU sessions.

### 4. Quality of service (quality of service, QoS):

QoS intends to provide end-to-end quality of service guarantee for different requirements of various services. QoS is a tool for effectively using network resources, and allows different traffic to compete for network resources in an unequal manner. Voice, videos, and important data applications can be preferentially served on a network device. Factors that affect network quality include a bandwidth, latency, jitter, a packet loss rate, and the like. These factors affecting network service quality can all be used as QoS metrics.

QoS management is supported in both NSA (Non-Standalone) networking and SA (Standalone) networking. However, in SA networking, the concept of bearer is not used between an access network device and a core network. Instead, an evolved packet system (evolved packet system, EPS) bearer in NSA networking changes to a QoS flow (flow). Each QoS flow is identified by one QoS flow identifier (QoS flow ID, QFI). In a PDU session, a QFI of each QoS flow is unique. The core network notifies the access network device of an identifier (5G QoS identifier, 5QI) corresponding to each QoS flow, to determine a QoS attribute of the QoS flow. When a connection is established between a terminal device and the access network device, the access network device needs to map a QoS flow to an access network resource, to implement data transmission between the terminal device, the access network device, and the core network.

### 5. Non-3GPP access type:

The non-3GPP access type includes untrusted non-3GPP access (untrusted non-3GPP access) technology (for example, access to a core network through a wireless access node purchased by an individual), a trusted non-3GPP access (trusted non-3GPP access) technology (for example, access to the core network through a wireless access node deployed by an operator), a wireline access (wireline access) technology, and the like.

The non-3GPP access technology may include a wireless communication technology (Wi-Fi), Bluetooth, ZigBee (ZigBee), or the like.

A non-3GPP access network device may include a non-3GPP interworking function (non-3GPP interworking function, N3IWF), a trusted non-3GPP gateway function (trusted non-3GPP gateway function, TNGF), a trusted non-3GPP access point (trusted non-3GPP access point, TNAP), a trusted wireless local area network interworking function (trusted wireless local area network interworking function, TWIF), and a wireline access gateway function (wireline access gateway function, W-AGF). The W-AGF may also be referred to as an AGF. For example, if an access technology is the untrusted non-3GPP access technology, a non-3GPP access network device corresponding to the untrusted non-3GPP access technology may include an N3IWF. A network topology structure of the N3IWF is equivalent to a radio access network (radio access network, RAN) in a 3GPP access network, and an N2 interface and an N3 interface may be supported. For example, if the access technology is the trusted non-3GPP access technology, a non-3GPP access network device corresponding to the trusted non-3GPP access technology may include a TNGF. A network topology structure of the TNGF is equivalent to a RAN in the 3GPP access network, and an N2 interface and an N3 interface may be supported.

The technologies provided in embodiments of this application may be applied to a scenario in which a terminal device accesses a core network by using a 3GPP access type or the non-3GPP access type. An example in which the non-3GPP access type includes the untrusted non-3GPP access technology and the trusted non-3GPP access technology is used for description.

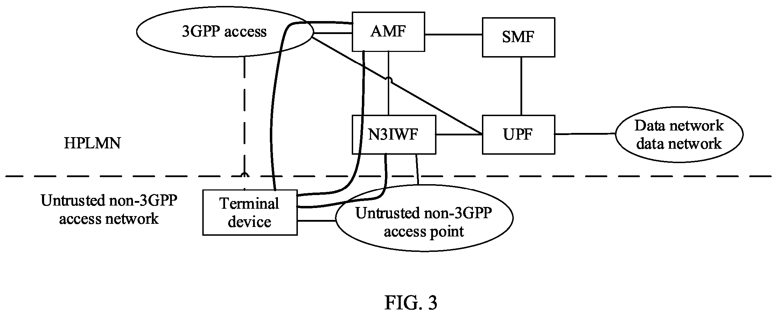

FIG. 3 is a diagram of an untrusted non-3GPP access system according to an embodiment of this application. That an access network device in a non-3GPP access network is an N3IWF is used as an example. A terminal device first establishes a connection to an untrusted non-3GPP access point; obtains an Internet protocol (Internet protocol, IP) address; and then obtains IP identification information of the N3IWF, for example, address information, via a DNS server according to an N3IWF discovery and selection rule. The terminal device accesses a core network through the N3IWF.

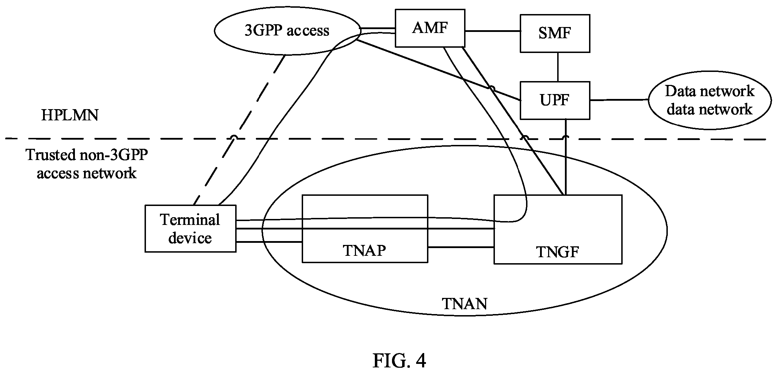

FIG. 4 is a diagram of a trusted non-3GPP access system according to an embodiment of this application, for example, a Wi-Fi AP deployed in a public place. That an access network device in a non-3GPP access network is a TNGF is used as an example. A terminal device first selects a PLMN, and selects a non-3GPP access network that provides a trusted connection in the PLMN. The terminal device then selects a connection type (for example, 5G connectivity or 4G S2a connectivity).

The following describes functions of the devices shown in FIG. 3 and FIG. 4.

The untrusted non-3GPP access point may be an access node deployed by a non-carrier, for example, a Wi-Fi access point (access point, AP) deployed at home or by a merchant.

The N3IWF may be configured to allow interconnection and interworking between the terminal device and a 3GPP core network according to a non-3GPP technology. The N3IWF supports communication with a mobility management device through the N2 interface, and supports communication with a user plane device through the N3 interface.

The trusted non-3GPP access point may be an access node deployed by a carrier, and may be referred to as a trusted non-3GPP access node (trusted N3GPP Access Point, TNAP).

The TNAP may be configured to: send an authentication, authorization, and accounting (authentication, authorization, and accounting, AAA) message, for example, encapsulate an identity authentication protocol (extensible authentication protocol, EAP) data packet into the AAA message, and interact with the TNGF to forward an EAP message.

The TNGF may be configured to support the N2 interface and the N3 interface, may be configured to terminate EAP-5G signaling, and may implement functions such as AMF selection, processing of N2 signaling with an SMF (relayed by an AMF), session and quality of service (quality of service, QoS) support, and transparent relay of a protocol data unit (protocol data unit, PDU) between the terminal device and the user plane device.

The 3GPP access point may be an access node deployed by the carrier, for example, a RAN node.

A user plane function network element (user plane function, UPF) is configured to implement functions such as user plane data forwarding, session/stream-level based charging statistics, and bandwidth limiting.

The session management function network element (session management function, SMF) is configured to perform functions such as session management, control policy execution, user plane function network element selection, and Internet protocol (Internet protocol, IP) address allocation for a terminal.

The access and mobility management function network element (access and mobility management function, AMF) is configured to perform functions such as mobility management and access authentication/authorization. In addition, the access and mobility management function network element is further responsible for transferring a user policy to the terminal.

The terminal device may also be referred to as user equipment (user equipment, UE), a mobile station, a mobile terminal, or the like. In FIG. 1, UE represents a terminal device. The terminal device may be widely used in various scenarios, for example, device-to-device (device-to-device, D2D), vehicle-to-everything (vehicle-to-everything, V2X) communication, machine-type communication (machine-type communication, MTC), Internet of things (Internet of things, IoT), virtual reality, augmented reality, industrial control, autonomous driving, telemedicine, a smart grid, smart furniture, a smart office, smart wearable, smart transportation, and a smart city. The terminal may be a mobile phone, a tablet computer, a computer with a wireless transceiver function, a wearable device, a vehicle, an uncrewed aerial vehicle, a helicopter, an airplane, a ship, a robot, a robotic arm, a smart home device, or the like. A specific technology and a specific device form used by the terminal device are not limited by embodiments of this application.

A name of a message or information in embodiments of this application is merely an example of this application, and the name of the message or information may alternatively be another name. This is not limited in embodiments of this application.

"Stream" in embodiments of this application may be understood as a stream. In a possible implementation, the "stream" in embodiments of this application may be understood or replaced with other information finer than a connection granularity.

In embodiments of this application, that a connection is used to transmit a session may be understood as that the connection is used to transmit a service stream corresponding to the session. For example, that a connection is used to transmit a first session may be understood as that the connection is used to transmit a service stream corresponding to the first session.

In embodiments of this application, "at least one" means one or more, and "a plurality of' means two or more than two. The term "and/or" describes an association relationship between associated objects, and indicates that three relationships may exist. For example, A and/or B may indicate the following cases: Only A exists, both A and B exist, and only B exists, where A and B may be singular or plural. The character "/" generally indicates an "or" relationship between the associated objects. "At least one of the following items (pieces)" or a similar expression thereof refers to any combination of these items, including a single term (piece) or any combination of a plurality of items (pieces). For example, at least one of a, b, and (or) c may indicate a, b, c, a and b, a and c, b and c, or a, b and c, where each of a, b, and c may be an element, or may be a set including one or more elements.

In this application, "for example", "in some embodiments", "in some other embodiments", and the like are used to represent giving an example, an illustration, or a description. Any embodiment or design scheme described as an "example" in this application should not be explained as being more preferred or having more advantages than another embodiment or design scheme. Exactly, the term "for example" is for presenting a concept in a specific manner.

"Of (of)", "corresponding (corresponding, relevant)", and "corresponding (corresponding)" in this application may be interchangeably used sometimes. It should be noted that expressed meanings are the same when differences are not emphasized. In embodiments of this application, communication and transmission may be interchangeably used sometimes. It should be noted that expressed meanings are the same when differences are not emphasized. For example, transmission may include sending and/or receiving, and may be a noun or a verb.

In this application, "indication" may include a direct indication, an indirect indication, an explicit indication, and an implicit indication. When a piece of indication information is described as indicating A, it may be understood that the indication information carries A, directly indicates A, or indirectly indicates A.

It should be noted that, in embodiments of this application, words such as "first" and "second" are merely used for distinction and descriptions, and cannot be understood as an indication or implication of relative importance or an indication or implication of a sequence.

A terminal device may access a network through a 3GPP access network device or a non-3GPP access network device. When a connection based on a first protocol is established between the terminal device and the non-3GPP access network device to transmit signaling and/or user plane data, how the terminal device discovers the non-3GPP access network device that supports the connection based on the first protocol becomes a problem that needs to be resolved.

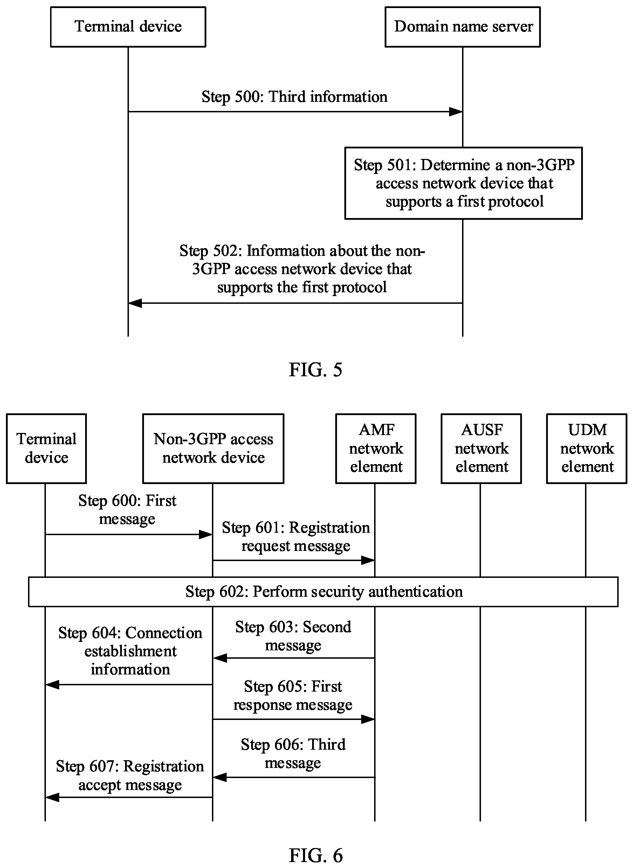

In view of this, an embodiment of this application provide an access network device selection method. FIG. 5 is an example flowchart of an access network device selection method according to an embodiment of this application. The method may include the following operations. The embodiment shown in FIG. 5 may be applied to an untrusted non-3GPP access system, for example, the communication system shown in FIG. 3.

Step 500: A terminal device sends third information to a domain name server (domain name server, DNS).

Correspondingly, the domain name server receives the third information sent by the terminal device.

The third information indicates to query a non-3GPP access network device that supports a first protocol.

For example, the first protocol may be a QUIC protocol, and the third information indicates to query a non-3GPP access network device that supports the QUIC protocol. In a possible implementation, the first protocol may be a transport layer protocol or an IP layer protocol. A protocol specifically corresponding to the first protocol is not limited in this application.

Optionally, the third information may be carried in a query message, and the query request indicates to query the non-3GPP access network device.

The query message may include domain name information, for example, a full qualified domain name (full qualified domain name, FQDN). The domain name information may include a public land mobile network (public land mobile network, PLMN) ID or an SNPN ID.

In a possible implementation, the third information is newly added to the domain name information. For example, the third information may be included in a field of the domain name information. The terminal device adds the third information to the domain name information, to indicate that the terminal device requests to query the non-3GPP access network device that supports the first protocol. For example, when the first protocol is the QUIC protocol, the third information may be a QUIC label (label), to indicate that the terminal device needs to query the non-3GPP access network device that supports the QUIC protocol.

Step 501: The domain name server determines the non-3GPP access network device that supports the first protocol.

After receiving the third information, the domain name server selects, from candidate non-3GPP access network devices, the non-3GPP access network device that supports the first protocol.

For example, when the third information is included in the domain name information, the domain name server may determine whether an Internet protocol (Internet protocol, IP) address or identification information, of an access network device, corresponding to the domain name information exists. If the Internet protocol address or identification information exists, the domain name server determines that the access network device with the IP address or the identification information corresponding to the domain name information (for example, the FQDN) is the non-3GPP access network device that supports the first protocol. Correspondingly, if it is determined that the IP address or identification information, of the access network device, corresponding to the domain name information (for example, the FQDN) does not exist, it indicates that the non-3GPP access network device that supports the first protocol is not determined.

Step 502: The domain name server sends, to the terminal device, information about the non-3GPP access network device that supports the first protocol.

Correspondingly, the terminal device receives the information, sent by the domain name server, about the non-3GPP access network device that supports the first protocol.

Optionally, the information about the non-3GPP access network device that supports the first protocol may include: identification information of the non-3GPP access network device and/or an IP address of the non-3GPP access network device.

Optionally, the domain name server may include, in a query response message, the information about the non-3GPP access network device that supports the first protocol. The domain name server sends the query response message to the terminal device, where the query response message includes the information about the non-3GPP access network device that supports the first protocol. For example, the query response message includes the identification information of the non-3GPP access network device and/or the IP address of the non-3GPP access network device.

According to a procedure of the access network device selection method provided in this embodiment of this application, the terminal device may query, from the domain name server, the non-3GPP access network device that supports the first protocol. For example, when an access network device in the untrusted non-3GPP access system is an N3IWF, the terminal device may query, via the domain name server, the N3IWF that supports the first protocol.

In addition, for the untrusted non-3GPP access system, the terminal device may determine, based on first configuration information, the information about the non-3GPP access network device that supports the first protocol.

Optionally, the first configuration information may be preconfigured on the terminal device, and the first configuration information includes the information about the non-3GPP access network device that supports the first protocol. For example, the first configuration information includes the domain name information (for example, the FQDN) of the non-3GPP access network device that supports the first protocol, the IP address of the non-3GPP access network device that supports the first protocol, and the identification information of the non-3GPP access network device that supports the first protocol.

According to the access network device selection method provided in this embodiment of this application, the terminal device may determine, based on the first configuration information, the non-3GPP access network device that supports the first protocol. For example, when the access network device in the untrusted non-3GPP access system is the N3IWF, the terminal device may determine, based on the FQDN, the IP address, or the identification information, of the N3IWF that supports the first protocol, that is included in the first configuration information, the N3IWF that supports the first protocol.

After determining, according to the access network device selection method, the non-3GPP access network device that supports the first protocol, the terminal device may register with a core network via the non-3GPP access network device that supports the first protocol, and establish a connection to the non-3GPP access network device in this process.

In the following description, the connection between the terminal device and the non-3GPP access network device may be a connection based on the first protocol. For example, when the first protocol is the QUIC protocol, the connection between the terminal device and the non-3GPP access network device is a QUIC connection.

The following describes a registration procedure and a connection establishment procedure with reference to FIG. 6.

Step 600: A terminal device sends a first message to a non-3GPP access network device.

Correspondingly, the non-3GPP access network device receives the first message sent by the terminal device.

Optionally, the first message includes a NAS message, and the NAS message may be a registration request message. The registration request message may indicate that the terminal device requests to register with a core network.

For example, the first message may be an identity authentication protocol (extensible authentication protocol, EAP) message.

When the terminal device determines that the currently accessed non-3GPP access network device supports a first protocol, the terminal device may indicate, via the first message, that a connection based on the first protocol needs to be established.

In a possible implementation, the first message sent by the terminal device to the non-3GPP access network device may not be encapsulated according to an IKEv2 protocol, which indicates that an IPSec tunnel (or a connection) is not to be established with the non-3GPP access network device, or indicates that the connection based on the first protocol is to be established.

For example, when the first protocol is a QUIC protocol, the first message sent by the terminal device to the non-3GPP access network device may not be encapsulated according to the IKEv2 protocol. Correspondingly, after the non-3GPP access network device receives the first message, the non-3GPP access network device may determine that the terminal device needs to establish a QUIC connection.

In another case, if the terminal device does not determine whether the accessed non-3GPP access network device supports the first protocol (for example, the terminal device does not determine, according to the foregoing procedure, a non-3GPP access network device that supports the first protocol), the terminal device may attempt to establish the connection based on the first protocol to the non-3GPP access network device.

For example, when the first protocol is the QUIC protocol, the terminal device sends, to the non-3GPP access network device, the first message that is not encapsulated according to the IKEv2 protocol. When the non-3GPP access network device supports the QUIC protocol, the non-3GPP access network device performs corresponding processing on the received first message. When the non-3GPP access network device does not support the QUIC protocol, the non-3GPP access network device may send a rejection message to the terminal device, to indicate that the non-3GPP access network device does not support the QUIC protocol.

Optionally, the NAS message may include an access network (access network, AN) parameter. The AN parameter may include a parameter used by the non-3GPP access network device to select an AMF network element. For example, the AN parameter may include but is not limited to: a globally unique AMF identifier (globally unique AMF identifier, GUAMI) and a PLMN ID; or the AN parameter may include but is not limited to: a GUAM, an IPLMN ID, and a network identification (network identification, NID).

Step 601: The non-3GPP access network device selects the AMF network element, and sends a registration request message to the AMF network element.

Optionally, the non-3GPP access network device may select the AMF network element based on the AN parameter carried in the NAS message in the first message.

A NAS message (for example, a registration request message) sent by the non-3GPP access network device to the AMF network element may be the NAS message (for example, the registration request message) in the first message.

Step 602: The AMF network element performs security authentication.

For example, a security authentication procedure may include: The AMF network element selects an AUSF network element, and sends an authentication request message to the AUSF network element. The AUSF network element performs an authentication procedure on the terminal device, and obtains authentication data from a UDM network element. An authentication-related data packet may be encapsulated via the NAS message, and the NAS message may be encapsulated via an EAP/5G-NAS data packet. After authentication is completed, the AUSF network element sends a security key to the AMF network element, and the AMF network element may derive and obtain a security key of the non-3GPP access network device based on the security key. The security key of the non-3GPP access network device may be used to encrypt the connection, based on the first protocol, established between the terminal device and the non-3GPP access network device.

Step 603: The AMF network element sends a second message to the non-3GPP access network device.

Correspondingly, the non-3GPP access network device receives the second message sent by the AMF network element.

The second message may include the security key of the non-3GPP access network device. After the connection based on the first protocol is established between the terminal device and the non-3GPP access network device, when data and/or signaling are/is sent via the established connection, the sent data and/or signaling may be encrypted via the security key of the non-3GPP access network device.

For example, the second message may be an initial context setup request message.

Step 604: The non-3GPP access network device sends connection establishment information to the terminal device.

Correspondingly, the terminal device receives the connection establishment information sent by the non-3GPP access network device.

The connection establishment information is used to establish a second connection between the terminal device and the non-3GPP access network device, and the second connection may be used to transmit control signaling between the terminal device and the non-3GPP access network device according to the first protocol. For example, the control signaling may include an AS message (for example, an RRC message) or a NAS message.

For example, the second connection may be a QUIC connection, and the QUIC connection may be used to transmit control signaling between the terminal device and the non-3GPP access network device according to the QUIC protocol.

Optionally, before step 604 is performed, the non-3GPP access network device determines that the terminal device needs to communicate with the non-3GPP access network device according to the first protocol. In a possible implementation, the first message sent by the terminal device to the non-3GPP access network device may not be encapsulated according to the IKEv2 protocol, which indicates that an IPSec tunnel (or a connection) is not to be established with the non-3GPP access network device, or indicates that the connection based on the first protocol is to be established. For example, when the first protocol is the QUIC protocol, if the first message received by the non-3GPP access network device is not encapsulated according to the IKEv2 protocol, the non-3GPP access network device may determine to communicate with the terminal device according to the QUIC protocol. In this case, the non-3GPP access network device sends the connection establishment information to the terminal device, to establish the QUIC connection to the terminal device.

After the non-3GPP access network device determines to communicate with the terminal device according to the first protocol, the non-3GPP access network device allocates, to the terminal device, the connection establishment information related to connection establishment. The non-3GPP access network device sends the connection establishment information to the terminal device, and has established the connection based on the first protocol to the terminal device.

Optionally, the connection establishment information includes but is not limited to: a connection identifier, IP address information, port information, and a stream identifier. In a possible implementation, the stream identifier may be replaced with a frame identifier, a packet identifier, or other identification information whose granularity is less than that of a connection.

Step 605: The non-3GPP access network device sends a first response message to the AMF network element.

Correspondingly, the AMF network element receives the first response message sent by the non-3GPP access network device.

The first response message may be a response message for the second message.

For example, when the second message is the initial context setup request message, the first response message may be an initial context setup response message.

Step 606: The AMF network element sends a third message to the non-3GPP access network device.

Correspondingly, the non-3GPP access network device receives the third message sent by the AMF network element.

Optionally, the third message may include a registration accept message sent to the terminal device; and the registration accept message may be a NAS message, which indicates that a registration request of the terminal device is accepted.

For example, the third message may be an N2 message.

Step 607: The non-3GPP access network device sends the registration accept message to the terminal device.

Correspondingly, the terminal device receives the registration accept message sent by the non-3GPP access network device.

The registration accept message is used to notify the terminal device that the terminal device has registered with the core network.

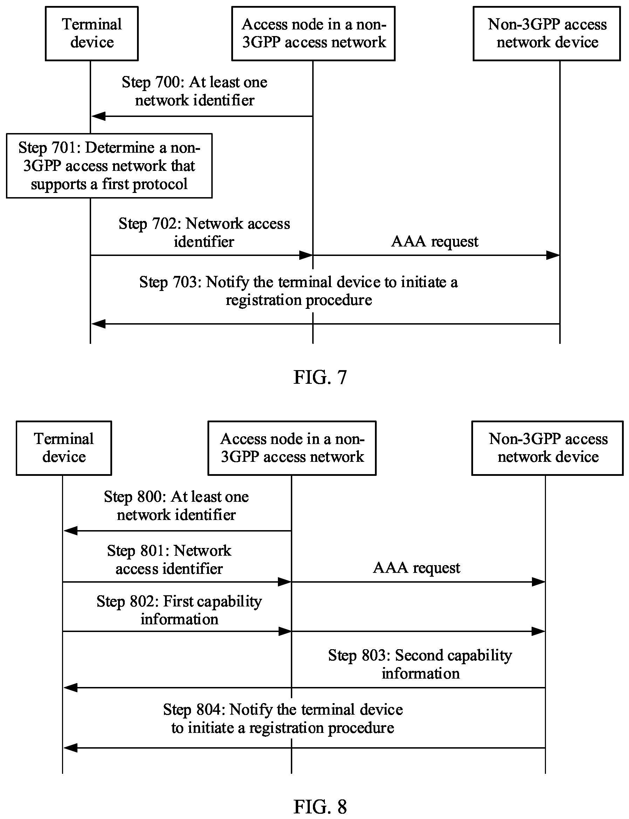

An embodiment of this application further provides an access network device selection method. FIG. 7 is an example flowchart of an access network device selection method according to an embodiment of this application. The method may include the following operations. The embodiment shown in FIG. 7 may be applied to a trusted non-3GPP access system, for example, the communication system shown in FIG. 4.

Step 700: An access node in a trusted non-3GPP access network sends at least one network identifier. The network identifier may be a public network identifier such as a PLMN ID or a non-public network identifier such as an SNPN ID (or a PLMN ID and an NID).

Optionally, the access node in the trusted non-3GPP access network may send a broadcast message, where the broadcast message may include the at least one network identifier. For example, the access node in the trusted non-3GPP access network may broadcast a network list, and the network list may include the at least one network identifier.

The at least one network identifier indicates a network that a trusted non-3GPP access network device supports to connect to.

For example, the network identifier may include but is not limited to the PLMN ID and the SNPN ID.

In a possible implementation, the access node in the trusted non-3GPP access network may broadcast a service set identifier (service set identifier, SSID).

For example, the access node in the trusted non-3GPP access network in step 700 in this embodiment of this application may be an access node deployed by an operator, and may be referred to as a trusted non-3GPP access node (TNAP).

Step 701: The terminal device determines a non-3GPP access network that supports a first protocol.

That the terminal device determines the non-3GPP access network that supports the first protocol may be understood as determining a TNAN that supports the first protocol, or may be understood as determining a non-3GPP access node (for example, a TNAP) corresponding to the non-3GPP access network device that supports the first protocol, or may be understood as determining an SSID corresponding to the non-3GPP access network device that supports the first protocol.

The terminal device may determine, in a plurality of different manners, the non-3GPP access network that supports the first protocol. The following separately provides descriptions.

Manner 1: The terminal device determines, based on the network identifier sent by the access node in the trusted non-3GPP access network, the non-3GPP access network that supports the first protocol.

In this manner, when sending the at least one network identifier, the access node in the trusted non-3GPP access network may indicate whether a network corresponding to the network identifier supports the first protocol, or may indicate whether a non-3GPP access network device in a network corresponding to the network identifier supports the first protocol. For example, marking information may be added to the at least one network identifier sent by the access node in the trusted non-3GPP access network, to mark a network that supports the first protocol, or mark a network that does not support the first protocol.

According to this manner, the terminal device may select, based on the at least one network identifier sent by the access node in the trusted non-3GPP access network, the non-3GPP access network that supports the first protocol.

Manner 2: The terminal device determines, based on second configuration information, the non-3GPP access network that supports the first protocol from the at least one network identifier sent by the access node in the trusted non-3GPP access network.

The second configuration information may be used to configure a non-3GPP access network that supports the first protocol. For example, the second configuration information may include the SSID that supports the first protocol; or the non-3GPP access network device (for example, a TNGF) that supports the first protocol; or the access node in the trusted non-3GPP access network (for example, the TNAP) that supports the first protocol.

Step 702: The terminal device sends a network access identifier (network access identifier, NAI) to the access node in the non-3GPP access network that supports the first protocol.

Correspondingly, the access node in the non-3GPP access network that supports the first protocol receives the network access identifier sent by the terminal device.

The NAI indicates that 5G connectivity (5G connectivity) to a specific PLMN is requested, for example, NAI="<any_username>@nai.5gc. mnc<MNC>.mcc<MCC>.3gppnetwork.org". The NAI triggers the access node in the non-3GPP access network to send an AAA request (AAA request) to the non-3GPP access network device (for example, the TNAP sends an AAA request to the TNGF). An EAP data packet between the access node in the non-3GPP access network and the non-3GPP access network device is encapsulated via the AAA message. The AAA request further includes an identifier of the access node in the non-3GPP access network, which may be used as user location information (user location information, ULI).

Optionally, before the terminal device sends the network access identifier to the access node in the non-3GPP access network that supports the first protocol, the terminal device may establish an L2 connection to the access node in the non-3GPP access network. Correspondingly, in step 702, the terminal device may send the network access identifier via an L2 message.

Step 703: The non-3GPP access network device notifies the terminal device to initiate a registration procedure.

It may be understood that, that the non-3GPP access network device notifies the terminal device to initiate the registration procedure may also be referred to as that the non-3GPP access network device notifies the terminal device to initiate an EAP-5G session.

Optionally, the non-3GPP access network device sends an EAP Request/5G-Start data packet to the terminal device. The EAP-Request/5G-Start data packet may be used to notify the terminal device to initiate the EAP-5G session, for example, notify the terminal device to start to send a NAS message (by encapsulating the NAS message into an EAP-5G data packet).

When the terminal device establishes the L2 connection to the access node in the non-3GPP access network, the non-3GPP access network device may send the L2 message to the terminal device, and the non-3GPP access network device may send the EAP Request/5G-Start data packet to the terminal device via the L2 message.

In addition, an embodiment of this application further provides an access network device selection method. A terminal device sends first capability information to an access network device in a non-3GPP access network, where the first capability information indicates that the terminal device supports a first protocol. The access network device in the non-3GPP access network sends second capability information to the terminal device, where the second capability information indicates that the non-3GPP access network device supports the first protocol. According to this method, the terminal device and the access network device in the non-3GPP access network may perform capability negotiation. FIG. 8 is an example flowchart of an access network device selection method according to an embodiment of this application. The method may include the following operations. The method may be applied to a trusted non-3GPP access system, for example, the communication system shown in FIG. 4.

Step 800: An access node in a trusted non-3GPP access network sends at least one network identifier.

For step 800 in which the access node in the trusted non-3GPP access network sends the at least one network identifier, refer to the foregoing descriptions in step 700.

Step 801: A terminal device sends a network access identifier (network access identifier, NAI) to the access node in the non-3GPP access network that supports a first protocol.

For step 801 in which the terminal device sends the network access identifier to the access node in the non-3GPP access network that supports the first protocol, refer to the foregoing descriptions in step 702.

Step 802: The terminal device sends first capability information to the access node in the non-3GPP access network.

The first capability information indicates that the terminal device supports the first protocol.

The access node in the non-3GPP access network sends the first capability information to a non-3GPP access network device.

The network access identifier in step 801 and the first capability information in step 802 may be sent via a same message or different messages. When the network access identifier and the first capability information are sent via different messages, a sequence of performing step 801 and step 802 is not limited in this embodiment of this application.

Optionally, before the terminal device sends the network access identifier to the access node in the non-3GPP access network that supports the first protocol, the terminal device may establish an L2 connection to the access node in the non-3GPP access network. Correspondingly, the terminal device may send the network access identifier and the first capability information via an L2 message.

Step 803: The non-3GPP access network device sends second capability information to the terminal device.

The second capability information indicates that the non-3GPP access network device supports the first protocol.

Step 804: The non-3GPP access network device notifies the terminal device to initiate a registration procedure.

It may be understood that, that the non-3GPP access network device notifies the terminal device to initiate the registration procedure may also be referred to as that the non-3GPP access network device notifies the terminal device to initiate an EAP-5G session.

Optionally, the non-3GPP access network device sends an EAP Request/5G-Start data packet to the terminal device. The EAP-Request/5G-Start data packet may be used to notify the terminal device to initiate the EAP-5G session, for example, notify the terminal device to start to send a NAS message (by encapsulating the NAS message into an EAP-5G data packet).

The second capability information in step 803 and the EAP Request/5G-Start data packet in step 804 may be sent via a same message or different messages. When the second capability information and the EAP Request/5G-Start data packet are sent via different messages, a sequence of performing step 803 and step 804 is not limited in this embodiment of this application.

When the terminal device establishes the L2 connection to the access node in the non-3GPP access network, the non-3GPP access network device may send the L2 message to the terminal device, and the non-3GPP access network device may send the EAP Request/5G-Start data packet and the second capability information to the terminal device via the L2 message.

It should be noted that, when the terminal device cannot determine, in the manner in step 701, the non-3GPP access network that supports the first protocol (for example, the terminal device does not obtain the second configuration information; or when sending the at least one network identifier, the access node in the trusted non-3GPP access network does not indicate whether a network corresponding to the network identifier supports the first protocol), the terminal device may select, according to the procedure shown in FIG. 8, the non-3GPP access network device that supports the first protocol.

After determining, according to the access network device selection method, the non-3GPP access network device that supports the first protocol, the terminal device may register with a core network via the non-3GPP access network device that supports the first protocol, and establish a connection to the non-3GPP access network device in this process.

In the following description, a connection between the terminal device and the non-3GPP access network device may be a connection based on the first protocol. For example, when the first protocol is a QUIC protocol, the connection between the terminal device and the non-3GPP access network device is a QUIC connection.

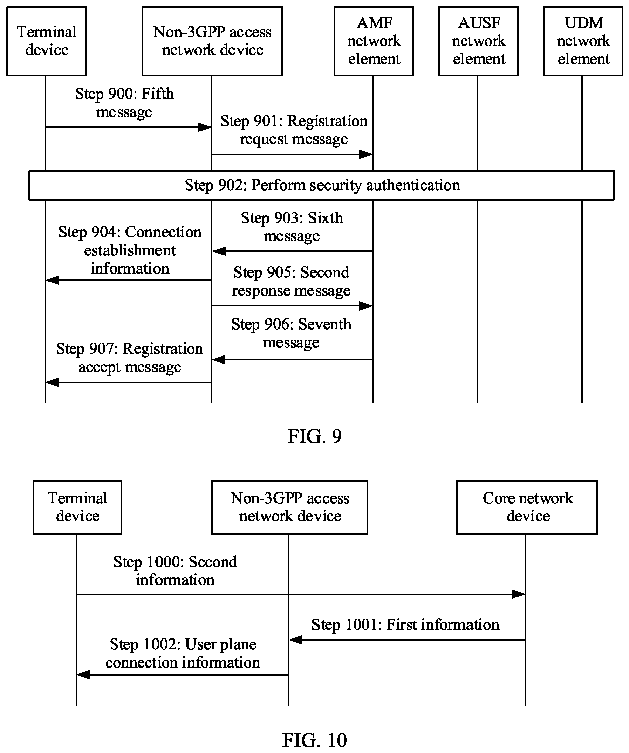

The following describes a registration procedure and a connection establishment procedure with reference to FIG. 9.

Step 900: A terminal device sends a fifth message to a non-3GPP access network device.

Correspondingly, the non-3GPP access network device receives the fifth message sent by the terminal device.

Optionally, the fifth message may be an L2 message.

For example, the fifth message may include an EAP-Response/5G-NAS data packet, and the EAP-Response/5G-NAS data packet may include a registration request message. The registration request message may indicate that the terminal device requests to register with a core network. The EAP-Response/5G-NAS data packet may further include an AN parameter. The AN parameter may include a parameter used by the non-3GPP access network device to select an AMF network element. For example, the AN parameter may include but is not limited to a GUAMI and a PLMN ID; or the AN parameter may include but is not limited to a GUAMI, an IPLMN ID, and an NID.

When the terminal device determines that the currently accessed non-3GPP access network device supports a first protocol, the terminal device may indicate, via the first message, that a connection based on the first protocol needs to be established.

In a possible implementation, the first message sent by the terminal device to the non-3GPP access network device may not be encapsulated according to an IKEv2 protocol, which indicates that an IPSec tunnel (or a connection) is not to be established with the non-3GPP access network device, or indicates that the connection based on the first protocol is to be established.

For example, when the first protocol is a QUIC protocol, the fifth message sent by the terminal device to the non-3GPP access network device may not be encapsulated according to the IKEv2 protocol. Correspondingly, after the non-3GPP access network device receives the fifth message, the non-3GPP access network device may determine that the terminal device needs to establish a QUIC connection.

Step 901: The non-3GPP access network device selects the AMF network element, and sends a registration request message to the AMF network element.

Optionally, the non-3GPP access network device may select the AMF network element based on the AN parameter in the fifth message.

A NAS message (for example, a registration request message) sent by the non-3GPP access network device to the AMF network element may be a NAS message (for example, the registration request message) in the fifth message.

Step 902: The AMF network element performs security authentication.

It should be noted that, for a procedure in which the AMF network element performs security authentication in step 902, refer to the foregoing description of step 602.

Step 903: The AMF network element sends a sixth message to the non-3GPP access network device.

Correspondingly, the non-3GPP access network device receives the sixth message sent by the AMF network element.

The sixth message may include a security key of the non-3GPP access network device. After the connection based on the first protocol is established between the terminal device and the non-3GPP access network device, when data and/or signaling are/is sent via the established connection, the sent data and/or signaling may be encrypted via the security key of the non-3GPP access network device.

For example, the sixth message may be an initial context setup request message.

Step 904: The non-3GPP access network device sends connection establishment information to the terminal device.

Correspondingly, the terminal device receives the connection establishment information sent by the non-3GPP access network device.

The connection establishment information is used to establish a second connection between the terminal device and the non-3GPP access network device, and the second connection may be used to transmit control signaling between the terminal device and the non-3GPP access network device according to the first protocol. For example, the control signaling may include an AS message (for example, an RRC message) or the NAS message.

For example, the second connection may be a QUIC connection, and the QUIC connection may be used to transmit the control signaling between the terminal device and the non-3GPP access network device according to the QUIC protocol.

Optionally, before step 904 is performed, the non-3GPP access network device determines that the terminal device needs to communicate with the non-3GPP access network device according to the first protocol. In a possible implementation, the fifth message sent by the terminal device to the non-3GPP access network device may not be encapsulated according to the IKEv2 protocol, which indicates that an IPSec tunnel (or a connection) is not to be established with the non-3GPP access network device, or indicates that the connection based on the first protocol is to be established. For example, when the first protocol is the QUIC protocol, if the fifth message received by the non-3GPP access network device is not encapsulated according to the IKEv2 protocol, the non-3GPP access network device may determine to communicate with the terminal device according to the QUIC protocol. In this case, the non-3GPP access network device sends the connection establishment information to the terminal device, to establish the QUIC connection to the terminal device.

After the non-3GPP access network device determines to communicate with the terminal device according to the first protocol, the non-3GPP access network device allocates, to the terminal device, the connection establishment information related to connection establishment. The non-3GPP access network device sends the connection establishment information to the terminal device, and has established the connection based on the first protocol to the terminal device.

Optionally, the connection establishment information includes but is not limited to: a connection identifier, IP address information, port information, and a stream identifier. In a possible implementation, the stream identifier may be replaced with a frame identifier, a packet identifier, or other identification information whose granularity is less than that of a connection.

Step 905: The non-3GPP access network device sends a second response message to the AMF network element.

Correspondingly, the AMF network element receives the second response message sent by the non-3GPP access network device.

The second response message may be a response message for the sixth message.

For example, when the sixth message is the initial context setup request message, the second response message may be an initial context setup response message.

Step 906: The AMF network element sends a seventh message to the non-3GPP access network device.

Correspondingly, the non-3GPP access network device receives the seventh message sent by the AMF network element.

Optionally, the seventh message may include a registration accept message sent to the terminal device, and the registration accept message may be a NAS message which indicates that a registration request of the terminal device is accepted.

For example, the seventh message may be an N2 message.

Step 907: The non-3GPP access network device sends the registration accept message to the terminal device.

Correspondingly, the terminal device receives the registration accept message sent by the non-3GPP access network device.

The registration accept message is used to notify the terminal device that the terminal device has registered with the core network.

After the terminal device registers with the core network via the non-3GPP access network device that supports the first protocol, the terminal device may establish a session via the established connection based on the first protocol (for example, the second connection established in the foregoing procedure). The following describes a session management procedure in an embodiment of this application with reference to FIG.10.

As shown in FIG.10, a communication method provided in an embodiment of this application may include the following operations. The embodiment shown in FIG.10 may be applied to an untrusted non-3GPP access system or a trusted non-3GPP access system, for example, the communication system shown in FIG. 3 or FIG. 4.

Step 1000: A terminal device sends second information.

The second information requests to establish a first session.

The second information sent by the terminal device may be a NAS message, or the second information may be information, carried in a NAS message, that indicates to establish the first session. The terminal device may send the second information to a core network device via a second connection that has been established between the terminal device and a non-3GPP access network device. For example, the core network device may be an AMF network element.

Optionally, the second information may be a session establishment request message, or the second information may be information, carried in a session establishment request message, that indicates to establish the first session.

The second information may include but is not limited to: a session identifier (session ID), a request type (request type), a data network name requested by the terminal device (UE requested DNN), and single network slice selection assistance information (single network slice selection assistance information, S-NSSAI).

Step 1001: The core network device sends first information to the non-3GPP access network device.

Correspondingly, the non-3GPP access network device receives the first information sent by the core network device.

The first information indicates to establish a user plane resource of the first session of the terminal device.

The core network device in step 1001 may be an AMF network element. The AMF network element receives the first information sent by the SMF network element, and sends the first information to the non-3GPP access network device.

Alternatively, the core network device in step 1001 may be an SMF network element. The SMF network element sends the first information to the non-3GPP access network device via an AMF network element.

Step 1002: The non-3GPP access network device determines user plane connection information based on the first information, and sends the user plane connection information to the terminal device.

The user plane connection information may indicate a first mapping relationship.

The first mapping relationship includes at least one of the following:
a mapping relationship between the first session and a first connection and/or a first stream (stream);
a mapping relationship between one or more QoS flows and the first connection and/or the first stream; and
a mapping relationship between a QoS flow in the first session and the first connection and/or the first stream.

The first connection is used to perform data transmission between the terminal device and the non-3GPP access network device according to a first protocol.

According to the foregoing communication procedure, when the terminal device establishes the first session via a connection request based on the first protocol, when creating a user plane connection or the user plane resource, the non-3GPP access network device may accurately map the first session or the QoS flow in the first session to the first connection and/or the first stream, between the terminal device and the non-3GPP access network device, that are/is based on the first protocol, thereby accurately transmitting service data of the terminal device.

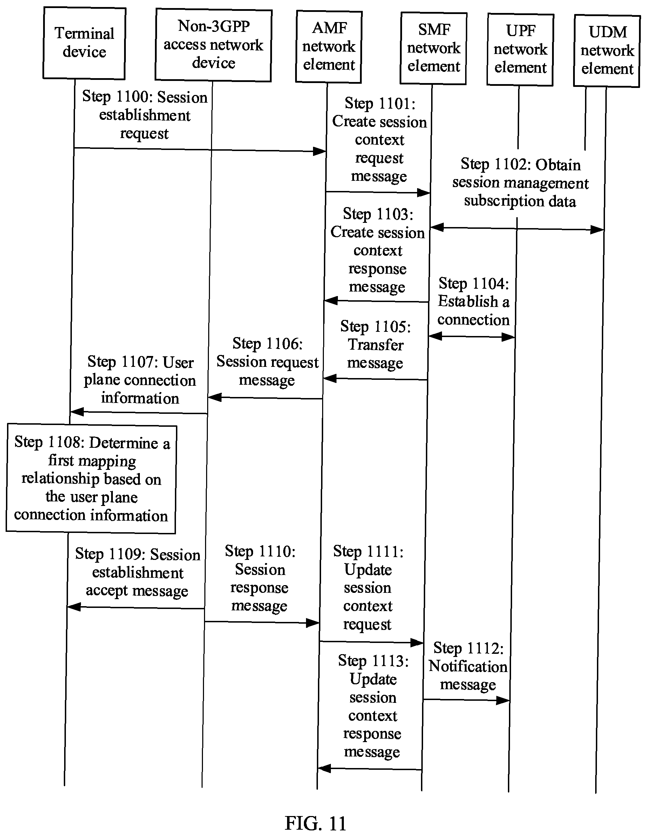

The following describes in detail the solutions in embodiments of this application with reference to a complete procedure in which a terminal device establishes a session. As shown in FIG. 11, a communication method provided in an embodiment of this application may include the following operations. The embodiment shown in FIG. 11 may be applied to an untrusted non-3GPP access system or a trusted non-3GPP access system, for example, the communication system shown in FIG. 3 or FIG. 4.

Step 1100: A terminal device sends a session establishment request message to an AMF network element.

Correspondingly, the AMF network element receives the session establishment request message sent by the terminal device.

It should be noted that step 1100 corresponds to step 1000. The second information in step 1000 may be the session establishment request message, or the second information may be information in the session establishment request message.

The terminal device may send the session establishment request message to the AMF network element via a second connection that has been established between the terminal device and a non-3GPP access network device.

The session establishment request message may be a NAS message. The session establishment request message may include but is not limited to: a session identifier (session ID), a request type (request type), a data network name requested by the terminal device (UE requested DNN), and single network slice selection assistance information (S-NSSAI).

Step 1101: The AMF network element selects an SMF network element, and sends a create session context request message to the SMF network element.

Correspondingly, the SMF network element receives the create session context request message sent by the AMF network element.

The create session context request message may include but is not limited to: a subscription permanent identifier (subscription permanent identifier, SUPI), the data network name requested by the terminal device (UE requested DNN), the session identifier (session ID), and the single network slice selection assistance information (S-NSSAI).

Step 1102: The SMF network element obtains session management subscription data from a UDM network element.

This step is an optional step.

Step 1103: The SMF network element sends a create session context response message to the AMF network element.

Correspondingly, the AMF network element receives the create session context response message sent by the SMF network element.

Step 1104: The SMF network element selects a UPF network element, and establishes a connection to the UPF network element.

Optionally, the SMF network element establishes an N4 connection to the UPF network element.

For example, the SMF network element sends an N4 rule to the UPF network element, where the N4 rule may include rules such as a data packet detection rule (Packet Detection Rule, PDR) and a forwarding action rule (Forwarding Action Rule, FAR).

Step 1105: The SMF network element sends a transfer message to the AMF network element.

For example, the transfer message may be an N1N2 message transfer message (Namf_Communication_N1N2MessageTransfer). The N1N2 message transfer message may include information such as a session identifier, N2 interface session management information (N2 SM information), and an N1 interface session management container (N1 SM Container).

The N2 SM information is sent by the SMF network element to the non-3GPP access network device via the AMF network element. Information in the N1 SM container is sent by the SMF network element to the terminal device via the AMF network element (the AMF network element sends the N1 SM container to the terminal device via a NAS message).

The N1 SM container includes a session establishment accept (Session Establishment Accept) message. The session establishment accept message may include an IP address allocated to the terminal device, that is, a source IP address used by the terminal device to send an uplink message.

The N2 SM information includes a QoS profile and associated QoS flow identifier (QoS flow identifier, QFI) information. In addition, the N2 SM container may further include CN tunnel information (core network tunnel information). The information includes a tunnel endpoint identifier and/or address information (for example, an IP address) of a UPF end, and the address is used as a destination address when the non-3GPP access network device forwards the uplink message (or the tunnel endpoint identifier needs to be included in a GTP-U protocol stack packet header).

Step 1106: The AMF network element sends a session request message to the non-3GPP access network device.

Correspondingly, the non-3GPP access network device receives the session request message sent by the AMF network element.

For example, the session request message may be an N2 session request message (for example, an N2 PDU session request). The session request message may carry the N2 SM information and the NAS message that needs to be sent to the terminal device. The NAS message may include the session identifier and the N1 SM container. The N2 SM information may include the QoS profile and the associated QFI information, or the N2 SM information may further include the CN tunnel information.

It should be noted that step 1106 corresponds to step 1001. The first information in step 1001 may be the session request message in step 1106, or the first information may be information in the session request message in step 1106.

The session request message may indicate to establish a user plane resource of a first session of the terminal device.

Step 1107: The non-3GPP access network device determines user plane connection information, and sends the user plane connection information to the terminal device.

In a possible implementation, the non-3GPP access network device determines the user plane connection information based on information, carried in the session request message, that is related to the first session (for example, the QoS profile and the QFI). In a possible implementation, the user plane connection information in this application may be understood as user plane resource information. A name of the user plane connection information is not limited in this application, and all information that can indicate a first connection may be understood as the user plane connection information.

The non-3GPP access network device sends the user plane connection information to the terminal device, and may indicate a first mapping relationship based on the user plane connection information.

The first mapping relationship may include a correspondence between at least one of a session and a QoS flow and at least one of the first connection and a stream.

The first mapping relationship in this embodiment of this application may include the foregoing different information content. When information content included in the first mapping relationship varies, content included in the user plane connection information sent by the non-3GPP access network device to the terminal device also varies.

It should be noted that, that the user plane connection information sent by the non-3GPP access network device to the terminal device indicates the first mapping relationship may be understood as that the user plane connection information is used to generate/obtain/constitute/form the first mapping relationship. For example, the terminal device may receive one or more pieces of user plane connection information to generate or constitute the first mapping relationship.

Optionally, the information content included in the user plane connection information may be different from the information content included in the first mapping relationship. For example, if the first mapping relationship includes a mapping relationship between a session and the first connection, and the first connection has been currently established for transmitting service data of the terminal device, the first connection may not need to be established. In this case, the user plane connection information may not include information indicating the first connection.

The following describes the first mapping relationship and the user plane connection information for different cases.

It should be noted that, in a plurality of cases described below, when determining the user plane connection information, the non-3GPP access network device may determine the user plane connection information according to a method described in any one of the cases. Alternatively, the non-3GPP access network device may determine the user plane connection information based on third configuration information.

The third configuration information may be used to configure a rule for mapping between a session and a connection and/or a stream, or configure a rule for mapping between a QoS flow in a session and a connection and/or a stream, or a rule for mapping between a QoS flow and a connection and/or a stream. For example, the non-3GPP access network device may determine, based on the third configuration information, which of the following cases currently applies, and further determine the user plane connection information and the first mapping relationship.

### Case 1:

1: The first mapping relationship includes a mapping relationship between the first session and a first stream.

Optionally, an application scenario to which the mapping relationship is applied may be: one connection based on a first protocol is used to transmit user plane data and control signaling. The user plane data and the control signaling are transmitted through different streams. For example, sessions are distinguished through different streams.

When establishing the user plane resource of the first session of the terminal device, the non-3GPP access network device needs to allocate the first stream to the first session. A connection for transmitting the user plane data and the control signaling between the terminal device and the non-3GPP access network device may be the second connection described above, and no new connection based on the first protocol needs to be established between the terminal device and the non-3GPP access network device. The second connection is used to transmit the first session and the control signaling of the terminal device. In this case, it may be understood that the first connection is the second connection.

The non-3GPP access network device determines that the user plane connection information includes identification information of the first stream.

Optionally, the user plane connection information may further include a session identifier of the first session.

The non-3GPP access network device sends the user plane connection information to the terminal device.

To facilitate subsequent accurate transmission of data and/or signaling, the first mapping relationship that needs to be maintained between the non-3GPP access network device and the terminal device includes a mapping relationship between one or more sessions of the terminal device and a stream. In a possible implementation, when the user plane connection information includes the identification information of the first stream and the session identifier of the first session, the non-3GPP access network device stores, in the first mapping relationship, the mapping relationship between the first session and the first stream. After receiving the user plane connection information, the terminal device generates (or obtains, or constitutes, or forms) the first mapping relationship based on the user plane connection information. For example, the terminal device stores, in the first mapping relationship based on the identification information of the first stream and the session identifier of the first session that are included in the user plane connection information, the mapping relationship between the first session and the first stream.

Table 1 shows the first mapping relationship that needs to be maintained between the non-3GPP access network device and the terminal device. A quantity of streams and a quantity of sessions included in Table 1 are merely examples.

**Table 1**

| stream ID 1 | Control signaling |
|---|---|
| stream ID2 | Session 1 |
| stream ID3 | Session 2 |

2: The first mapping relationship includes a mapping relationship between a QoS flow in the first session and a first stream.

Optionally, a scenario to which the mapping relationship is applied may be: one connection based on a first protocol is used to transmit user plane data and control signaling. The user plane data and the control signaling are transmitted through different streams. For example, QoS flows in a session are distinguished through different streams.

When establishing the user plane resource of the first session of the terminal device, the non-3GPP access network device needs to allocate the first stream to the QoS flow in the first session. A connection for transmitting the user plane data and the control signaling between the terminal device and the non-3GPP access network device may be the second connection described above, and no new connection based on the first protocol needs to be established between the terminal device and the non-3GPP access network device. The second connection is used to transmit the first session and the control signaling of the terminal device. In this case, it may be understood that the first connection is the second connection.

The non-3GPP access network device determines that the user plane connection information includes identification information of the QoS flow in the first session and identification information of the first stream.

Optionally, the user plane connection information may further include a session identifier of the first session.

It should be noted that, when the first session includes a plurality of QoS flows, the QoS flows in the first session may correspond to different streams, or some QoS flows correspond to a same stream.

To facilitate subsequent accurate transmission of data and/or signaling, the first mapping relationship that needs to be maintained between the non-3GPP access network device and the terminal device includes a mapping relationship between a QoS flow in one or more sessions of the terminal device and a stream. In a possible implementation, when the user plane connection information includes the identification information of the QoS flow in the first session and the identification information of the first stream, the non-3GPP access network device stores, in the first mapping relationship, the mapping relationship between the QoS flow in the first session and the first stream. After receiving the user plane connection information, the terminal device generates (or obtains, or constitutes, or forms) the first mapping relationship based on the user plane connection information. For example, the terminal device stores, in the first mapping relationship based on the identification information of the QoS flow in the first session and the identification information of the first stream that are included in the user plane connection information, the mapping relationship between the QoS flow in the first session and the first stream.

Table 2 shows the first mapping relationship that needs to be maintained between the non-3GPP access network device and the terminal device. A quantity of streams, a quantity of sessions, and a quantity of QoS flows in a session included in Table 2 are merely examples.

**Table 2**

| stream ID1 | Control signaling |
|---|---|
| stream ID2 | Session 1 QFI=1 |
| stream ID3 | Session 1 QFI=2 |

### Case 2:

1: The first mapping relationship includes a mapping relationship between the first session and the first connection and a first stream.

Optionally, an application scenario to which the mapping relationship is applied may be: transmitting control signaling via a second connection, and transmitting user plane data via one first connection. For example, sessions are distinguished through different streams.

When establishing the user plane resource of the first session of the terminal device, the non-3GPP access network device needs to determine whether to establish the first connection, and allocate the first stream to the first session. The first connection is used to transmit one or more sessions of the terminal device, the one or more sessions include the first session, and the first session corresponds to the first stream.

When the first connection has been currently established, when establishing the user plane resource of the first session of the terminal device, the non-3GPP access network device determines that the first connection does not need to be established; and the non-3GPP access network device determines that the user plane connection information includes identification information of the first stream. Optionally, the user plane connection information may further include a session identifier of the first session.

When the first connection is not currently established, when establishing the user plane resource of the first session of the terminal device, the non-3GPP access network device determines that the first connection needs to be established; and the non-3GPP access network device establishes the first connection. The user plane connection information includes the identification information of the first stream and information indicating the first connection. The information indicating the first connection may include at least one of a connection identifier, IP address information, and port information of the first connection. Optionally, the user plane connection information may further include a session identifier of the first session.

To facilitate subsequent accurate transmission of data and/or signaling, the first mapping relationship that needs to be maintained between the non-3GPP access network device and the terminal device includes a mapping relationship between one or more sessions of the terminal device and a connection and a stream. In a possible implementation, when the user plane connection information includes the identification information of the first stream, the information indicating the first connection, and the session identifier of the first session, the non-3GPP access network device stores, in the first mapping relationship, the mapping relationship between the first session and the first connection and the first stream. After receiving the user plane connection information, the terminal device generates (or obtains, or constitutes, or forms) the first mapping relationship based on the user plane connection information. For example, the terminal device stores, in the first mapping relationship based on the identification information of the first stream, the information indicating the first connection, and the session identifier of the first session that are included in the user plane connection information, the mapping relationship between the first session and the first connection and the first stream.

Table 3 shows the first mapping relationship that needs to be maintained between the non-3GPP access network device and the terminal device. A quantity of streams and a quantity of sessions included in Table 3 are merely examples.

**Table 3**

| connection ID 1 | | Control signaling |
|---|---|---|
| connection ID 2 | stream ID2 | Session 1 |
| connection ID 2 | stream ID3 | Session 2 |

2: The first mapping relationship includes a mapping relationship between a QoS flow in the first session and the first connection and a first stream.

Optionally, a scenario to which the mapping relationship is applied may be: transmitting control signaling via a second connection, and transmitting user plane data via one first connection. For example, QoS flows in a session are distinguished through different streams.

When establishing the user plane resource of the first session of the terminal device, the non-3GPP access network device needs to determine whether to establish the first connection, and allocate the first stream to the QoS flow in the first session. The first connection is used to transmit one or more sessions of the terminal device, the one or more sessions include the first session, and the first stream is used to transmit one or more QoS flows in the first session.

When the first connection has been currently established, when establishing the user plane resource of the first session of the terminal device, the non-3GPP access network device determines that the first connection does not need to be established. In this case, the non-3GPP access network device determines that the user plane connection information includes identification information of the QoS flow in the first session and identification information of the first stream. Optionally, the user plane connection information may further include a session identifier of the first session.

When the first connection is not currently established, when establishing the user plane resource of the first session of the terminal device, the non-3GPP access network device determines that the first connection needs to be established; and the non-3GPP access network device establishes the first connection. The user plane connection information includes identification information of the QoS flow in the first session, identification information of the first stream, and information indicating the first connection. The information indicating the first connection may include at least one of a connection identifier, IP address information, and port information of the first connection. Optionally, the user plane connection information may further include a session identifier of the first session.

It should be noted that, when the first session includes a plurality of QoS flows, the QoS flows in the first session may correspond to different streams, or some QoS flows correspond to a same stream.

To facilitate subsequent accurate transmission of data and/or signaling, the first mapping relationship that needs to be maintained between the non-3GPP access network device and the terminal device includes a mapping relationship between a QoS flow in one or more sessions of the terminal device and a connection and a stream. In a possible implementation, when the user plane connection information includes the identification information of the QoS flow in the first session, the identification information of the first stream, and the information indicating the first connection, the non-3GPP access network device stores, in the first mapping relationship, the mapping relationship between the QoS flow in the first session and the first connection and the first stream. After receiving the user plane connection information, the terminal device generates (or obtains, or constitutes, or forms) the first mapping relationship based on the user plane connection information. For example, the terminal device stores, in the first mapping relationship based on the identification information of the QoS flow in the first session, the identification information of the first stream, and the information indicating the first connection that are included in the user plane connection information, the mapping relationship between the QoS flow in the first session and the first connection and the first stream.

Table 4 shows the first mapping relationship that needs to be maintained between the non-3GPP access network device and the terminal device. A quantity of streams, a quantity of sessions, and a quantity of QoS flows in a session included in Table 4 are merely examples.

**Table 4**

| connection ID 1 | | Control signaling |
|---|---|---|
| connection ID 2 | stream ID2 | Session 1 QFI=1 |
| connection ID 2 | stream ID3 | Session 1 QFI=2 |

### Case 3:

1: The first mapping relationship includes a mapping relationship between the first session and the first connection.

Optionally, an application scenario to which the mapping relationship is applied may be: transmitting control signaling via a second connection, and transmitting user plane data via one or more connections based on a first protocol. For example, a connection for transmitting user plane data is at a session granularity (which may be understood as that different sessions correspond to different connections).

When establishing the user plane resource of the first session of the terminal device, the non-3GPP access network device establishes the first connection for the first session. The first connection is used to transmit the first session.

The non-3GPP access network device determines that the user plane connection information includes information indicating the first connection. The information indicating the first connection may include at least one of a connection identifier, IP address information, and port information of the first connection. Optionally, the user plane connection information may further include a session identifier of the first session.

To facilitate subsequent accurate transmission of data and/or signaling, the first mapping relationship that needs to be maintained between the non-3GPP access network device and the terminal device includes a mapping relationship between one or more sessions of the terminal device and a connection. In a possible implementation, when the user plane connection information includes the information indicating the first connection and the session identifier of the first session, the non-3GPP access network device stores, in the first mapping relationship, the mapping relationship between the first session and the first connection. After receiving the user plane connection information, the terminal device generates (or obtains, or constitutes, or forms) the first mapping relationship based on the user plane connection information. For example, the terminal device stores, in the first mapping relationship based on the information indicating the first connection and the session identifier of the first session that are included in the user plane connection information, the mapping relationship between the first session and the first connection.

Table 5 shows the first mapping relationship that needs to be maintained between the non-3GPP access network device and the terminal device. A quantity of connections and a quantity of sessions included in Table 5 are merely examples.

**Table 5**

| connection ID 1 | Control signaling |
|---|---|
| connection ID 2 | Session 1 |
| connection ID 3 | Session 2 |

2: The first mapping relationship includes a mapping relationship between a QoS flow in the first session and the first connection and a first stream.

Optionally, an application scenario to which the mapping relationship is applied may be: transmitting control signaling via a second connection, and transmitting user plane data via one or more other connections based on a first protocol. For example, a connection for transmitting the user plane data is at a session granularity (which may be understood as that different sessions correspond to different connections), and QoS flows in a session may be distinguished through different streams.

When establishing the user plane resource of the first session of the terminal device, the non-3GPP access network device establishes the first connection for the first session, and allocates the first stream to the QoS flow in the first session. The first connection is used to transmit the first session, and the first stream is used to transmit one or more QoS flows in the first session.

In a possible implementation, the non-3GPP access network device determines that the user plane connection information includes information indicating the first connection, identification information of the QoS flow in the first session, and identification information of the first stream, where the information indicating the first connection may include at least one of a connection identifier, IP address information, and port information of the first connection. Optionally, the user plane connection information may further include a session identifier of the first session.

In another possible implementation, the non-3GPP access network device determines that the user plane connection information includes information indicating the first connection, identification information of the QoS flow in the first session, and identification information of a corresponding first stream, where the information indicating the first connection may include at least one of a connection identifier, IP address information, and port information of the first connection. Optionally, the user plane connection information may further include a session identifier of the first session.

In still another possible implementation, the non-3GPP access network device determines that the user plane connection information includes identification information of the QoS flow in the first session and identification information of a corresponding first stream. Optionally, the user plane connection information may further include a session identifier of the first session.

It should be noted that, when the first session includes a plurality of QoS flows, the QoS flows in the first session may correspond to different streams, or some QoS flows correspond to a same stream.

To facilitate subsequent accurate transmission of data and/or signaling, the first mapping relationship that needs to be maintained between the non-3GPP access network device and the terminal device includes a mapping relationship between a QoS flow in one or more sessions of the terminal device and a connection and a stream. In a possible implementation, when the user plane connection information includes the identification information of the QoS flow in the first session, the identification information of the corresponding first stream, and the information indicating the first connection, the non-3GPP access network device stores, in the first mapping relationship, the mapping relationship between the QoS flow in the first session and the first connection and the first stream. After receiving the user plane connection information, the terminal device generates (or obtains, or constitutes, or forms) the first mapping relationship based on the user plane connection information. For example, the terminal device stores, in the first mapping relationship based on the identification information of the QoS flow in the first session, the identification information of the corresponding first stream, and the information indicating the first connection that are included in the user plane connection information, the mapping relationship between the QoS flow in the first session and the first connection and the first stream.

Table 6 shows the first mapping relationship that needs to be maintained between the non-3GPP access network device and the terminal device. A quantity of connections, a quantity of sessions, and a quantity of QoS flows in a session included in Table 6 are merely examples.

**Table 6**

| connection ID 1 | | Control signaling |
|---|---|---|
| connection ID 2 | stream ID2 | Session 1 QFI=1 |
| connection ID 3 | stream ID2 | Session 2 QFI=1 |
| connection ID 3 | stream ID3 | Session 2 QFI=2 |

### Case 4

The first mapping relationship includes a mapping relationship between a QoS flow in the first session and the first connection.

Optionally, an application scenario to which the mapping relationship is applied may be: transmitting control signaling via a second connection, and transmitting user plane data via one or more connections based on a first protocol. For example, a connection for transmitting the user plane data is at a QoS flow granularity in a session (which may be understood as that different sessions correspond to different connections, and different QoS flows in a same session correspond to different connections; or may be understood as that different QoS flows in different sessions correspond to different connections).

When establishing the user plane resource of the first session of the terminal device, the non-3GPP access network device establishes the first connection for the QoS flow in the first session. The first connection is used to transmit one or more QoS flows in the first session.

The non-3GPP access network device determines that the user plane connection information includes information indicating the first connection and identification information of the QoS flow in the first session. The information indicating the first connection may include at least one of a connection identifier, IP address information, and port information of the first connection. Optionally, the user plane connection information may further include a session identifier of the first session.

It should be noted that, when the first session includes a plurality of QoS flows, the QoS flows in the first session may correspond to different first connections, or some QoS flows correspond to a same first connection.

To facilitate subsequent accurate transmission of data and/or signaling, the first mapping relationship that needs to be maintained between the non-3GPP access network device and the terminal device includes a mapping relationship between a QoS flow in one or more sessions of the terminal device and a connection. In a possible implementation, when the user plane connection information includes the information indicating the first connection and the identification information of the QoS flow in the first session, the non-3GPP access network device stores, in the first mapping relationship, the mapping relationship between the QoS flow in the first session and the first connection. After receiving the user plane connection information, the terminal device generates (or obtains, or constitutes, or forms) the first mapping relationship based on the user plane connection information. For example, the terminal device stores, in the first mapping relationship based on the information indicating the first connection and the identification information of the QoS flow in the first session that are included in the user plane connection information, the mapping relationship between the QoS flow in the first session and the first connection.

Table 7 shows the first mapping relationship that needs to be maintained between the non-3GPP access network device and the terminal device. A quantity of connections, a quantity of sessions, and a quantity of QoS flows in a session included in Table 7 are merely examples.

**Table 7**

| connection ID 1 | Control signaling |
|---|---|
| connection ID 2 | Session 1 QFI=1 |
| connection ID 3 | Session 2 QFI=1 |
| connection ID 4 | Session 2 QFI=2 |
| connection ID 5 | Session 3 QFI=2, QFI=3 |

### Case 5:

1: The first mapping relationship includes a mapping relationship between one or more QoS flows and the first connection.

Optionally, an application scenario to which the mapping relationship is applied may be: transmitting control signaling via a second connection, and transmitting user plane data via one or more connections based on a first protocol. For example, a connection for transmitting the user plane data is at a QoS flow granularity (which may be understood as that different QoS flows correspond to different connections, for example, same QoS flows in different sessions correspond to a same connection).

When establishing the user plane resource of the first session of the terminal device, the non-3GPP access network device needs to determine whether to establish the first connection. The first connection is used to transmit same QoS flows in one or more sessions of the terminal device, and the one or more sessions include the first session.

The non-3GPP access network device may determine, based on a QoS flow included in the first session, whether to establish the first connection.

For example, if all QoS flows included in the first session are included in a session that has been established by the terminal device (or identifiers of QoS flows included in the session that has been established by the terminal device all include an identifier of the QoS flow included in the first session), the non-3GPP access network device determines that the first connection does not need to be established. Optionally, the non-3GPP access network device may still send the user plane connection information to the terminal device, and the non-3GPP access network device determines that the user plane connection information includes identification information of the QoS flow. Optionally, the non-3GPP access network device may send the user plane connection information via a connection corresponding to the QoS flow, to indicate the terminal device to transmit the QoS flow in the session via the connection.

For another example, if the QoS flow included in the first session is not included in the session that has been established by the terminal device, the non-3GPP access network device establishes a first connection corresponding to the QoS flow. In this case, the non-3GPP access network device determines that the user plane connection information includes identification information of the QoS flow and information indicating the first connection. The information indicating the first connection may include at least one of a connection identifier, IP address information, and port information of the first connection.

To facilitate subsequent accurate transmission of data and/or signaling, the first mapping relationship that needs to be maintained between the non-3GPP access network device and the terminal device includes a mapping relationship between one or more QoS flows and a connection. In a possible implementation, when the user plane connection information includes the identification information of the QoS flow and the information indicating the first connection, the non-3GPP access network device stores, in the first mapping relationship, the mapping relationship between the QoS flow and the first connection. After receiving the user plane connection information, the terminal device generates (or obtains, or constitutes, or forms) the first mapping relationship based on the user plane connection information. For example, the terminal device stores, in the first mapping relationship based on the identification information of the QoS flow and the information indicating the first connection that are included in the user plane connection information, the mapping relationship between the QoS flow and the first connection.

Table 8 shows the first mapping relationship that needs to be maintained between the non-3GPP access network device and the terminal device. A quantity of streams and a quantity of sessions included in Table 8 are merely examples.

**Table 8**

| connection ID 1 | Control signaling |
|---|---|
| connection ID 2 | QFI=1 |
| connection ID 3 | QFI=2 |
| connection ID 4 | QFI=3 |

2: The first mapping relationship includes a mapping relationship between one or more QoS flows in the first session and the first connection and a first stream.

Optionally, a scenario to which the mapping relationship is applied may be: transmitting control signaling via a second connection, and transmitting user plane data via one or more connections based on a first protocol. For example, a connection for transmitting the user plane data is at a QoS flow granularity (which may be understood as that different QoS flows correspond to different connections, for example, same QoS flows in different sessions correspond to a same connection). Sessions may be distinguished through different streams.

When establishing the user plane resource of the first session of the terminal device, the non-3GPP access network device needs to determine whether to establish the first connection, and allocate the first stream to the first session. The first connection is used to transmit same QoS flows in one or more sessions of the terminal device, the one or more sessions include the first session, and the first stream is used to transmit the first session.

The non-3GPP access network device may determine, based on a QoS flow included in the first session, whether to establish the first connection.

For example, if all QoS flows included in the first session are included in a session that has been established by the terminal device (or identifiers of QoS flows included in the session that has been established by the terminal device all include an identifier of the QoS flow included in the first session), the non-3GPP access network device determines that the first connection does not need to be established. In this case, the non-3GPP access network device determines that the user plane connection information includes identification information of the QoS flow and identification information of the first stream. Optionally, the user plane connection information may further include a session identifier of the first session.

For another example, if the one or more QoS flows included in the first session are not included in the session that has been established by the terminal device (or the identifiers of the QoS flows included in the session that has been established by the terminal device do not include identifiers of the one or more QoS flows in the first session), the non-3GPP access network device establishes a first connection corresponding to the QoS flow. In this case, the non-3GPP access network device determines that the user plane connection information includes identification information of the QoS flow, information indicating the first connection, and identification information of the first stream. The information indicating the first connection may include at least one of a connection identifier, IP address information, and port information of the first connection. Optionally, the user plane connection information may further include a session identifier of the first session.

To facilitate subsequent accurate transmission of data and/or signaling, the first mapping relationship that needs to be maintained between the non-3GPP access network device and the terminal device includes a mapping relationship between a QoS flow in one or more sessions of the terminal device and a connection and a stream. In a possible implementation, when the user plane connection information includes the identification information of the QoS flow, the identification information of the first stream, and the information indicating the first connection, the non-3GPP access network device stores, in the first mapping relationship, the mapping relationship between the QoS flow in the first session and the first connection and the first stream. After receiving the user plane connection information, the terminal device generates (or obtains, or constitutes, or forms) the first mapping relationship based on the user plane connection information. For example, the terminal device stores, in the first mapping relationship based on the identification information of the QoS flow, the identification information of the first stream, and the information indicating the first connection that are included in the user plane connection information, the mapping relationship between the QoS flow in the first session and the first connection and the first stream.

Table 9 shows the first mapping relationship that needs to be maintained between the non-3GPP access network device and the terminal device. A quantity of streams and a quantity of sessions included in Table 9 are merely examples.

**Table 9**

| connection ID 1 | | Control signaling |
|---|---|---|
| connection ID 2 | stream1 | Session 1 QFI=1 |
| connection ID 2 | stream2 | Session 2 QFI=1 |
| connection ID 3 | stream2 | Session 2 QFI=2 |
| connection ID 3 | stream1 | Session 1 QFI=2 |

Step 1108: The terminal device determines the first mapping relationship based on the user plane connection information.

After receiving the user plane connection information, when determining, based on the user plane connection information, that the first connection needs to be established, the terminal device establishes the first connection to the non-3GPP access network device.

Step 1109: The non-3GPP access network device forwards a session establishment accept message to the terminal device.

The session establishment accept message may be the session establishment accept message carried in the N1 SM container.

Step 1110: The non-3GPP access network device sends a session response message to the AMF network element.

The session response message may be a response message for the session request message in step 1106.

For example, the session response message may be an N2 session response message. The N2 session response message may include access network tunnel information (AN Tunnel info) allocated by the non-3GPP access network device. The access network tunnel information may include a tunnel endpoint identifier and/or address information (for example, an IP address) of a non-3GPP access network device side, and the address is used as a destination address when the UPF network element forwards downlink data (or the tunnel endpoint identifier needs to be included in the GTP-U protocol stack packet header).

Step 1111: The AMF network element sends a session update session context request to the SMF network element.

The session update session context request may include the access network tunnel information sent by the non-3GPP access network device to the AMF network element.

Step 1112: The SMF network element sends a notification message to the UPF network element.

The notification message may include information of the AN tunnel endpoint identifier of the non-3GPP access network device side.

For example, the SMF network element may send the notification message to the UPF network element according to an N4 session modification procedure.

Step 1113: The SMF network element sends a session update session context response message to the AMF network element.

In this embodiment of this application, after the one or more sessions of the terminal device are established in the foregoing manner (the one or more sessions include the first session described above), data transmission may be performed between the terminal device and the core network based on the established PDU session.

For uplink data sent by the terminal device:
The terminal device obtains to-be-sent uplink data; determines, based on a session and/or a QoS flow corresponding to the uplink data and the first mapping relationship, a first connection and/or a first stream corresponding to the uplink data; and sends the uplink data to the non-3GPP access network device based on the first connection and/or the first stream corresponding to the uplink data.

After receiving the uplink data sent by the terminal device, the non-3GPP access network device determines, based on the first connection and/or the first stream used to send the uplink data and the first mapping relationship, the session and/or the QoS flow corresponding to the uplink data; and sends the uplink data to the UPF network element through the corresponding QoS flow and/or a corresponding N3 tunnel (or GTP-U tunnel).

The first mapping relationship may be any mapping relationship maintained by the terminal device and the non-3GPP access network device in the foregoing descriptions.

It should be noted that, when different QoS flows are distinguished through different streams, only same streams may be included in one data packet (packet) of the first connection, to avoid that streams corresponding to different QoS flows are placed in a same data packet, and differentiated QoS processing cannot be performed.

For downlink data of the terminal device:
The UPF network element obtains the downlink data of the terminal device. The UPF network element may determine, according to the N4 rule, a QoS flow corresponding to the downlink data; and send the downlink data to the non-3GPP access network device based on the QoS flow corresponding to the downlink data.

The non-3GPP access network device receives the downlink data, and determines a session and/or the QoS flow corresponding to the downlink data.

For example, the non-3GPP access network device may receive the downlink data through an N3 interface. The non-3GPP access network device may determine, based on an N3 tunnel endpoint identifier and QoS flow information in the GTP-U, the session and/or the QoS flow corresponding to the downlink data.

The non-3GPP access network device determines, based on the session and/or the QoS flow corresponding to the downlink data and the first mapping relationship, a first connection and/or a first stream corresponding to the downlink data; and sends the downlink data to the terminal device based on the first connection and/or the first stream corresponding to the downlink data.

The first mapping relationship may be any mapping relationship maintained by the terminal device and the non-3GPP access network device in the foregoing descriptions.

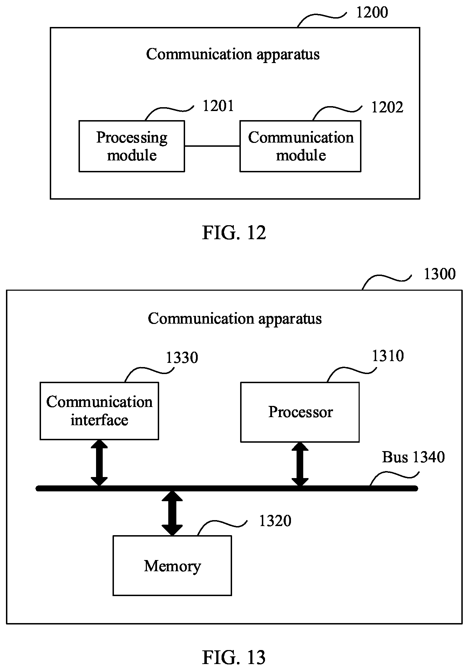

Based on a same concept, refer to FIG. 12. An embodiment of this application provides a communication apparatus 1200. The communication apparatus 1200 includes a processing module 1201 and a communication module 1202. The communication apparatus 1200 may be a non-3GPP access network device, or may be a communication apparatus that is used in a non-3GPP access network device or is used together with a non-3GPP access network device and that can implement a communication method performed on a non-3GPP access network device side. Alternatively, the communication apparatus 1200 may be a terminal device, or may be a communication apparatus that is used in a terminal device or is used together with a terminal device and that can implement a communication method performed on a terminal device side.

The communication module may also be referred to as a transceiver module, a transceiver, a transceiver machine, a transceiver apparatus, or the like. The processing module may also be referred to as a processor, a processing board, a processing unit, a processing apparatus, or the like. Optionally, the communication module is configured to perform a sending operation and a receiving operation of the non-3GPP access network device or the terminal device in the foregoing methods. A component configured to implement a receiving function in the communication module may be considered as a receiving unit, and a component configured to implement a sending function in the communication module may be considered as a sending unit. That is, the communication module includes the receiving unit and the sending unit.

When the communication apparatus 1200 is used in the non-3GPP access network device, the processing module 1201 may be configured to implement a processing function of the non-3GPP access network device in the embodiments shown in FIG. 6 to FIG. 11, and the communication module 1202 may be configured to implement receiving and sending functions of the non-3GPP access network device in the embodiments shown in FIG. 6 to FIG. 11.

When the communication apparatus 1200 is used in the terminal device, the processing module 1201 may be configured to implement a processing function of the terminal device in the embodiments shown in FIG. 5 to FIG. 11, and the communication module 1202 may be configured to implement receiving and sending functions of the terminal device in the embodiment shown in FIG. 5 to FIG. 11.

In addition, it should be noted that the communication module and/or the processing module may be implemented through a virtual module. For example, the processing module may be implemented through a software functional unit or a virtual apparatus, and the communication module may be implemented through a software function or a virtual apparatus. Alternatively, the processing module or the communication module may be implemented through a physical apparatus. For example, if the communication apparatus is implemented through a chip/chip circuit, the communication module may be an input/output circuit and/or a communication interface, and performs an input operation (corresponding to the foregoing receiving operation) and an output operation (corresponding to the foregoing sending operation). The processing module is an integrated processor, a microprocessor, or an integrated circuit.

Division into the modules in this embodiment of this application is an example, is merely logical function division, and may be other division during actual implementation. In addition, functional modules in each of embodiments of this application may be integrated into one processor, each of the modules may exist alone physically, or two or more modules may be integrated into one module. The integrated module may be implemented in a form of hardware, or may be implemented in a form of a software functional module.

Based on a same technical concept, an embodiment of this application further provides a communication apparatus 1300. For example, the communication apparatus 1300 may be a chip or a chip system. Optionally, in this embodiment of this application, the chip system may include a chip, or may include a chip and another discrete component.

The communication apparatus 1300 may be configured to implement a function of the non-3GPP access network device or the terminal device described in the foregoing embodiments. The communication apparatus 1300 may include at least one processor 1310. The processor 1310 is coupled to a memory. Optionally, the memory may be located in the communication apparatus, the memory may be integrated with the processor, or the memory may be located outside the communication apparatus. For example, the communication apparatus 1300 may further include at least one memory 1320. The memory 1320 stores a necessary computer program, a computer program, or instructions and/or data for implementing any one of the foregoing embodiments. The processor 1310 may execute the computer program stored in the memory 1320, to complete the method in any one of the foregoing embodiments.

The communication apparatus 1300 may further include a communication interface 1330. The communication apparatus 1300 may perform information interaction with another device through the communication interface 1330. For example, the communication interface 1330 may be a transceiver, a circuit, a bus, a module, a pin, or a communication interface of another type. When the communication apparatus 1300 is a chip-type apparatus or circuit, the communication interface 1330 in the communication apparatus 1300 may alternatively be an input/output circuit, and may input information (or receive information) and output information (or send information). The processor is an integrated processor, a microprocessor, an integrated circuit, or a logic circuit. The processor may determine output information based on input information.

The coupling in this embodiment of this application may be an indirect coupling or a communication connection between apparatuses, units, or modules in an electrical form, a mechanical form, or another form, and is used for information exchange between the apparatuses, the units, or the modules. The processor 1310 may cooperate with the memory 1320 and the communication interface 1330. A specific connection medium between the processor 1310, the memory 1320, and the communication interface 1330 is not limited in this embodiment of this application.

Optionally, refer to FIG. 13. The processor 1310, the memory 1320, and the communication interface 1330 are connected to each other through a bus 1340. The bus 1340 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, only one bold line is used for representation in FIG. 13, but this does not mean that there is only one bus or only one type of bus.

In this embodiment of this application, the processor may be a general-purpose processor, a digital signal processor, an application-specific integrated circuit, a field programmable gate array or another programmable logic device, a discrete gate or transistor logic device, or a discrete hardware component; and may implement or execute the methods, steps, and logical block diagrams disclosed in embodiments of this application. The general-purpose processor may be a microprocessor or any conventional processor or the like. The steps of the method disclosed with reference to embodiments of this application may be directly performed through a hardware processor, or may be performed through a combination of hardware in the processor and a software module.

In this embodiment of this application, the memory may be a non-volatile memory, a hard disk drive (hard disk drive, HDD) or a solid-state drive (solid-state drive, SSD), or may be a volatile memory (volatile memory), for example, a random access memory (random-access memory, RAM). The memory is any other medium that can carry or store expected program code in a form of an instruction or a data structure and that can be accessed by a computer, but is not limited thereto. The memory in this embodiment of this application may alternatively be a circuit or any other apparatus that can implement a storage function, and is configured to store the program instructions and/or the data.

The communication apparatus 1300 may be used in the terminal device. Specifically, the communication apparatus 1300 may be the non-3GPP access network device, or may be an apparatus that can support the non-3GPP access network device in implementing functions of the non-3GPP access network device in any one of the foregoing embodiments. The memory 1320 stores a computer program (or instructions) and/or data for implementing the function of the non-3GPP access network device in any one of the foregoing embodiments. The processor 1310 may execute the computer program stored in the memory 1320, to complete the method performed by the non-3GPP access network device in any one of the foregoing embodiments. When the communication apparatus 1300 is used in the non-3GPP access network device, the communication interface in the communication apparatus 1300 may be configured to: interact with another communication apparatus (for example, the terminal device), and send information to the another communication apparatus or receive information from the another communication apparatus.

The communication apparatus 1300 may be used in the terminal device. Specifically, the communication apparatus 1300 may be the terminal device, or may be an apparatus that can support the terminal device in implementing functions of the terminal device in any one of the foregoing embodiments. The memory 1320 stores a computer program (or instructions) and/or data for implementing the function of the terminal device in any one of the foregoing embodiments. The processor 1310 may execute the computer program stored in the memory 1320, to complete the method performed by the terminal device in any one of the foregoing embodiments. When the communication apparatus 1300 is used in the terminal device, the communication interface in the communication apparatus 1300 may be configured to: interact with another communication apparatus (for example, the non-3GPP access network device or a core network device), and send information to the another communication apparatus or receive information from the another communication apparatus.

An embodiment of this application further provides a communication system, including a terminal device and a domain name server. Optionally, the communication system further includes a non-3GPP access network device. Optionally, the communication system further includes a core network device, for example, an AMF network element or an SMF network element.

An embodiment of this application further provides a communication system, including a terminal device and a trusted non-3GPP access network device. Optionally, the communication system further includes a core network device, for example, an AMF network element or an SMF network element.

An embodiment of this application further provides a communication system, including a terminal device and a core network device.

It can be understood that the processor in embodiments of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The general-purpose processor may be a microprocessor or any conventional processor.

The technical solutions provided in embodiments of this application may be fully or partially implemented through software, hardware, firmware, or any combination thereof. When software is used to implement the embodiments, all or a part of the embodiments may be implemented in a form of a computer program product. The computer program product includes one or more computer instructions. When the computer program instructions are loaded and executed on a computer, the procedure or functions according to embodiments of this application are all or partially generated. The computer may be a general-purpose computer, a dedicated computer, a computer network, a terminal device, an access network device, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, that integrates one or more usable media. The usable medium may be a magnetic medium (for example, a floppy disk, a hard disk, or a magnetic tape), an optical medium (for example, a digital video disc (digital video disc, DVD)), a semiconductor medium, or the like.

In embodiments of this application, without a logical contradiction, embodiments may be mutually referenced. For example, methods and/or terms in the method embodiments may be mutually referenced. For example, functions and/or terms in the apparatus embodiments may be mutually referenced. For example, functions and/or terms in the apparatus embodiments and the method embodiments may be mutually referenced.

It is clear that persons skilled in the art may make various modifications and variations to embodiments of this application without departing from the scope of embodiments of this application. In this way, embodiments of this application are also intended to cover these modifications and variations provided that they fall within the scope of the claims of embodiments of this application and equivalent technologies thereof.

## Claims

1. A communication method, applied to a non-3rd Generation Partnership Project 3GPP access network device, wherein the method comprises:
receiving first information sent by a core network device, wherein the first information indicates to establish a user plane resource of a first session of a terminal device; and
determining user plane connection information based on the first information, and sending the user plane connection information to the terminal device, wherein the user plane connection information indicates a first mapping relationship, the first mapping relationship comprises at least one of the following: a mapping relationship between the first session and a first connection and/or a first stream, a mapping relationship between one or more QoS flows and the first connection and/or the first stream, and a mapping relationship between a QoS flow in the first session and the first connection and/or the first stream, and the first connection is used to perform data transmission between the terminal device and the non-3GPP access network device according to a first protocol.

2. The method according to claim 1, wherein the first mapping relationship comprises the mapping relationship between the first session and the first stream; and
the user plane connection information comprises identification information of the first stream.

3. The method according to claim 1, wherein the first mapping relationship comprises the mapping relationship between the QoS flow in the first session and the first stream; and
the user plane connection information comprises identification information of the QoS flow in the first session and identification information of the first stream.

4. The method according to claim 2 or 3, wherein the first connection is used to transmit the first session and control signaling of the terminal device.

5. The method according to claim 1, wherein the first mapping relationship comprises the mapping relationship between the first session and the first connection and the first stream; and
the user plane connection information comprises identification information of the first stream; or the user plane connection information comprises information indicating the first connection and identification information of the first stream.

6. The method according to claim 5, wherein the first connection is used to transmit one or more sessions of the terminal device, the one or more sessions comprise the first session, and the first session corresponds to the first stream.

7. The method according to claim 1, wherein the first mapping relationship comprises the mapping relationship between the QoS flow in the first session and the first connection and the first stream; and
the user plane connection information comprises identification information of the QoS flow in the first session and identification information of the first stream; or the user plane connection information comprises information indicating the first connection, identification information of the QoS flow in the first session, and identification information of the first stream.

8. The method according to claim 7, wherein the first connection is used to transmit one or more sessions of the terminal device, the one or more sessions comprise the first session, and the first stream is used to transmit one or more QoS flows in the first session; or
the first connection is used to transmit the first session, and the first stream is used to transmit one or more QoS flows in the first session; or
the first connection is used to transmit same QoS flows in one or more sessions of the terminal device, and the first stream is used to transmit the first session.

9. The method according to claim 1, wherein the first mapping relationship comprises the mapping relationship between the first session and the first connection; and
the user plane connection information comprises information indicating the first connection.

10. The method according to claim 9, wherein the first connection is used to transmit the first session.

11. The method according to claim 1, wherein the first mapping relationship comprises the mapping relationship between the QoS flow in the first session and the first connection; and
the user plane connection information comprises information indicating the first connection and identification information of the QoS flow in the first session.

12. The method according to claim 11, wherein the first connection is used to transmit one or more QoS flows in the first session.

13. The method according to claim 1, wherein the first mapping relationship comprises the mapping relationship between the one or more QoS flows and the first connection; and
the user plane connection information comprises identification information of a QoS flow; or
the user plane connection information comprises identification information of a QoS flow and information indicating the first connection.

14. The method according to claim 13, wherein the first connection is used to transmit same QoS flows in one or more sessions of the terminal device, and the one or more sessions comprise the first session.

15. The method according to any one of claims 5 to 14, wherein the method further comprises:
if it is determined that the first session or the first connection corresponding to the QoS flow in the first session is not established between the terminal device and the non-3GPP access network device, establishing the first session or the first connection corresponding to the QoS flow in the first session.

16. The method according to any one of claims 1 to 15, wherein the method further comprises:
receiving uplink data from the terminal device;
determining, based on a first connection and/or a first stream corresponding to the uplink data and the first mapping relationship, a session and/or a QoS flow corresponding to the uplink data; and
sending the uplink data based on the session and/or the QoS flow corresponding to the uplink data.

17. The method according to any one of claims 1 to 16, wherein the method further comprises:
receiving downlink data of the terminal device;
determining, based on a session and/or a QoS flow corresponding to the downlink data and the first mapping relationship, a first connection and/or a first stream corresponding to the downlink data; and
sending the downlink data to the terminal device based on the first connection and/or the first stream corresponding to the downlink data.

18. The method according to any one of claims 1 to 17, wherein the method further comprises:
if it is determined that the terminal device communicates with the non-3GPP access network device according to the first protocol, sending connection establishment information to the terminal device, wherein the connection establishment information is used to establish a second connection between the terminal device and the non-3GPP access network device, and the second connection is used to transmit control signaling between the terminal device and the non-3GPP access network device according to the first protocol.

19. The method according to any one of claims 1 to 18, wherein the method further comprises:
receiving first capability information sent by the terminal device, wherein the first capability information indicates that the terminal device supports the first protocol; and
sending second capability information to the terminal device, wherein the second capability information indicates that the non-3GPP access network device supports the first protocol.

20. A communication method, applied to a terminal device, wherein the method comprises:
sending second information, wherein the second information requests to establish a first session; and
receiving user plane connection information sent by the non-3GPP access network device, wherein the user plane connection information indicates a first mapping relationship, the first mapping relationship comprises at least one of the following: a mapping relationship between the first session and a first connection and/or a first stream, a mapping relationship between one or more QoS flows and the first connection and/or the first stream, and a mapping relationship between a QoS flow in the first session and the first connection and/or the first stream, and the first connection is used to perform data transmission between the terminal device and the non-3GPP access network device according to a first protocol.

21. The method according to claim 20, wherein the first mapping relationship comprises the mapping relationship between the first session and the first stream; and
the user plane connection information comprises identification information of the first stream.

22. The method according to claim 20, wherein the first mapping relationship comprises the mapping relationship between the QoS flow in the first session and the first stream; and
the user plane connection information comprises identification information of the QoS flow in the first session and identification information of the first stream.

23. The method according to claim 21 or 22, wherein the first connection is used to transmit the first session and control signaling of the terminal device.

24. The method according to claim 20, wherein the first mapping relationship comprises the mapping relationship between the first session and the first connection and the first stream; and
the user plane connection information comprises identification information of the first stream; or the user plane connection information comprises information indicating the first connection and identification information of the first stream.

25. The method according to claim 24, wherein the first connection is used to transmit one or more sessions of the terminal device, the one or more sessions comprise the first session, and the first session corresponds to the first stream.

26. The method according to claim 20, wherein the first mapping relationship comprises the mapping relationship between the QoS flow in the first session and the first connection and the first stream; and
the user plane connection information comprises identification information of the QoS flow in the first session and identification information of the first stream; or the user plane connection information comprises information indicating the first connection, identification information of the QoS flow in the first session, and identification information of the first stream.

27. The method according to claim 26, wherein the first connection is used to transmit one or more sessions of the terminal device, the one or more sessions comprise the first session, and the first stream is used to transmit one or more QoS flows in the first session; or
the first connection is used to transmit the first session, and the first stream is used to transmit one or more QoS flows in the first session; or
the first connection is used to transmit same QoS flows in one or more sessions of the terminal device, and the first stream is used to transmit the first session.

28. The method according to claim 20, wherein the first mapping relationship comprises the mapping relationship between the first session and the first connection; and
the user plane connection information comprises information indicating the first connection.

29. The method according to claim 28, wherein the first connection is used to transmit the first session.

30. The method according to claim 20, wherein the first mapping relationship comprises the mapping relationship between the QoS flow in the first session and the first connection; and
the user plane connection information comprises information indicating the first connection and identification information of the QoS flow in the first session.

31. The method according to claim 30, wherein the first connection is used to transmit one or more QoS flows in the first session.

32. The method according to claim 20, wherein the first mapping relationship comprises the mapping relationship between the one or more QoS flows and the first connection; and
the user plane connection information comprises identification information of a QoS flow; or
the user plane connection information comprises identification information of a QoS flow and information indicating the first connection.

33. The method according to claim 32, wherein the first connection is used to transmit same QoS flows in one or more sessions of the terminal device, and the one or more sessions comprise the first session.

34. The method according to any one of claims 20 to 33, wherein the method further comprises:
obtaining to-be-sent uplink data;
determining, based on a session and/or a QoS flow corresponding to the uplink data and the first mapping relationship, a first connection and/or a first stream corresponding to the uplink data; and
sending the uplink data to the non-3GPP access network device based on the first connection and/or the first stream corresponding to the uplink data.

35. The method according to any one of claims 20 to 34, wherein the method further comprises:
receiving connection establishment information sent by the non-3GPP access network device, wherein the connection establishment information is used to establish a second connection between the terminal device and the non-3GPP access network device, and the second connection is used to transmit control signaling between the terminal device and the non-3GPP access network device according to the first protocol.

36. The method according to any one of claims 20 to 35, wherein the method further comprises:
sending first capability information to the non-3GPP access network device, wherein the first capability information indicates that the terminal device supports the first protocol; and
receiving second capability information sent by the non-3GPP access network device, wherein the second capability information indicates that the non-3GPP access network device supports the first protocol.

37. The method according to any one of claims 20 to 36, wherein the method further comprises:
sending third information to a domain name server, wherein the third information indicates to query the non-3GPP access network device that supports the first protocol; and
receiving information, sent by the domain name server, about the non-3GPP access network device that supports the first protocol.

38. A communication apparatus, comprising a module configured to perform the method according to any one of claims 1 to 19, or comprising a module configured to perform the method according to any one of claims 20 to 37.

39. A communication apparatus, comprising a processor, wherein the processor is coupled to a memory, the memory is configured to store a computer program or instructions, and the processor is configured to execute the computer program or the instructions to implement the method according to any one of claims 1 to 19 or the method according to any one of claims 20 to 37.

40. A communication apparatus, comprising an interface circuit and a logic circuit, wherein
the interface circuit is configured to communicate with a module outside the communication apparatus; and
the logic circuit is configured to execute a computer program, to enable the communication apparatus to perform the method according to any one of claims 1 to 19, or enable the communication apparatus to perform the method according to any one of claims 20 to 37.

41. A communication system, comprising a non-3GPP access network device configured to perform the method according to any one of claims 1 to 19, and a terminal device configured to perform the method according to any one of claims 20 to 37.

42. A computer-readable storage medium, wherein the computer-readable storage medium stores a computer program or instructions, and when the instructions are run on a computer, the method according to any one of claims 1 to 19 or the method according to any one of claims 20 to 37 is implemented.

43. A computer program product, comprising a computer program, wherein when the computer program is executed by a communication apparatus, the method according to any one of claims 1 to 19 is implemented, or when the computer program is executed by a communication apparatus, the method according to any one of claims 20 to 37 is implemented.
